(19) Europäisches Patentamt
European Patent Office
Office européen des brevets

(11) **EP 4 214 582 B1**

(12) **EUROPEAN PATENT SPECIFICATION**

(45) Date of publication and mention
of the grant of the patent:
**22.05.2024 Bulletin 2024/21**

(21) Application number: **22747457.4**

(22) Date of filing: **17.06.2022**

(51) International Patent Classification (IPC):
**G05B 13/04** (2006.01)     **G05B 17/02** (2006.01)

(52) Cooperative Patent Classification (CPC):
**G05B 17/02; G05B 13/04**

(86) International application number:
**PCT/JP2022/026129**

(87) International publication number:
**WO 2023/058275 (13.04.2023 Gazette 2023/15)**

(54) **CALIBRATION SYSTEM AND METHOD FOR CALIBRATING AN INDUSTRIAL SYSTEM MODEL USING SIMULATION FAILURE**

KALIBRIERUNGSSYSTEM UND VERFAHREN ZUR KALIBRIERUNG EINES INDUSTRIESYSTEMMODELLS UNTER VERWENDUNG VON SIMULATIONSFEHLERN

SYSTÈME D'ÉTALONNAGE ET PROCÉDÉ D'ÉTALONNAGE D'UN MODÈLE DE SYSTÈME INDUSTRIEL À L'AIDE D'UN ÉCHEC DE SIMULATION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **05.10.2021 US 202117449968**

(43) Date of publication of application:
**26.07.2023 Bulletin 2023/30**

(73) Proprietor: **MITSUBISHI ELECTRIC CORPORATION**
**Chiyoda-ku**
**Tokyo 100-8310 (JP)**

(72) Inventors:
• **CHAKRABARTY, Ankush**
**Cambridge, Massachusetts 02139-1955 (US)**
• **LAUGHMAN, Christopher**
**Cambridge, Massachusetts 02139-1955 (US)**

(74) Representative: **Pfenning, Meinig & Partner mbB**
**Patent- und Rechtsanwälte**
**Joachimsthaler Straße 10-12**
**10719 Berlin (DE)**

(56) References cited:
**US-A1- 2020 327 435**

• **Chakrabarty Ankush ; ET AL: "Data-driven calibration of physics-informed models of joint building/equipment dynamics using Bayesian optimization", 2021 Building Simulation Conference, 16 September 2021 (2021-09-16), pages 1-10, XP055967697, Retrieved from the Internet: URL:https://www.merl.com/publications/docs /TR2021-105.pdf [retrieved on 2022-10-04]**
• **WU MENG ET AL: "A Feature-Based Diagnosis Framework for Power Plant Model Validation", 2018 POWER SYSTEMS COMPUTATION CONFERENCE (PSCC), POWER SYSTEMS COMPUTATION CONFERENCE, 11 June 2018 (2018-06-11), pages 1-7, XP033393263, DOI: 10.23919/PSCC.2018.8442668 [retrieved on 2018-08-20]**
• **GIL KEREN ET AL: "Calibrated Prediction Intervals for Neural Network Regressors", ARXIV.ORG, CORNELL UNIVERSITY LIBRARY, 201 OLIN LIBRARY CORNELL UNIVERSITY ITHACA, NY 14853, 26 March 2018 (2018-03-26), XP080859155,**

**Description**

[Technical Field]

The present disclosure relates generally to a calibration system and method for calibrating industrial system models, and more particularly to a calibration system and a method for calibrating an industrial system model based on simulation failure.

[Background Art]

Advances in modeling and computation have resulted in high-fidelity digital twin models capable of simulating the dynamics of a wide range of industrial systems. The digital twin is a virtual representation of a system that is updated from real-time data and uses simulation, machine learning, and reasoning to help in decision-making. The digital twin uses predictive models of dynamical systems designed for simulation, where the predictive models are often formulated as black-box modeling software that prohibits a user from accessing the underlying model structure.

The approach of formulating the predictive models as the black-box model may be used for a variety of reasons, including the emergent complexity that arises in software that is developed and refined over a period of years or decades, limited application programming interfaces to simplify interactions with larger software architectures, or the desire to avoid the wide distribution of trade secrets or proprietary information encoded in the model.

Despite the fact that this model structure is inaccessible to the user, its parameters often need to be estimated to calibrate the model to observed data. Existing parameter estimation algorithms applicable to black-box systems are designed under the assumption that the model can be simulated forward in time over any duration of interest for any set of parameters within an admissible search domain.

However, in practice, this assumption is invalidated by many existing simulation-oriented models due to multi-scale dynamics, significant nonlinearities, and numerically stiff behavior. Even with recent solvers, the forward simulation of such models often takes a significant amount of time due to small step-sizes and event-driven behavior in hybrid continuous/discrete systems. It is also common for the shape of the admissible parameter set that results in valid simulations to be complex and non-intuitive. Thus, parameters selected from user-defined search domains often result in simulation failure. In the worst-case, a candidate parameter set may result in a very slow simulation that culminates in failure, wasting significant compute. Such behavior can present significant barriers when implementing calibration methods on the black-box model.

Chakrabarty Ankush et al: "Data-driven calibration of physics-informed models of joint building/equipment dynamics using Bayesian optimization", 2021 Building Simulation Conference, pp. 1-10, XP055967697 discloses calibrating parameters of a model of coupled building and HVAC dynamics using Bayesian Optimization.

Wu Meng et al: "A Feature-Based Diagnosis Framework for Power Plant Model Validation", 2018 Power Systems Computation Conference, pp. 1-17, XP033393263 discloses a feature based diagnosis framework for determining the types of the power plant model problems by mimicking the human engineering judgement process via a supervised learning approach.

US 2020/327435 A1 discloses a system for sequential power system model calibration. The processor of the system receives a plurality of events associated with the device, filters and analyses said events to generate calibrated parameters for the model of the device.

Gil Keren et al: "Calibrated Prediction Intervals for Neural Network Regressors", Cornell University Library, XP080859155 discloses calibrated estimates of prediction uncertainties, which are modelled by calibrated prediction intervals.

Therefore, there is a need for an efficient system and/or method that can estimate near-optimal parameters without extensive simulations to avoid the expenditure of significant time and resources without a corresponding increase in simulation performance.

[Summary of Invention]

[Technical Problem]

Accordingly, it is an object of some embodiments to provide a calibration system and a calibration method that learns from simulation failures and incorporate this information to increase the probability of selecting sets of parameters that lead to successful simulations while avoiding the expenditure of significant time and resources.

Some embodiments are based on the realization that high-fidelity digital models (also referred to as "models"), capable of simulating the dynamics of a wide range of industrial systems, often require calibration or the estimation of an optimal set of parameters in some goodness-of-fit sense, to reflect observed behavior of the industrial system. While searching over parameter space (i.e., admissible range of the parameter) for one or more optimal values of the parameter is an inevitable part of the calibration process, models are seldom designed to be valid for arbitrarily large parameter spaces.

Some embodiments are based on the realization that application of existing calibration methods often results in repeated model evaluations over parameters that can cause the simulations to be unreasonably slow or fail altogether. In general, the shape of subregions in the parameter space that could result in simulation failure is unknown.

Such challenges are particularly common in building energy models. For example, an energy model may seek to describe the temporal behavior of occupied buildings with their associated closed-loop space conditioning systems. Time constants for the closed-loop space conditioning systems typically vary over many orders of magnitude, from milliseconds to weeks, and do not exhibit a clear separation of these timescales. These closed-loop space conditioning systems also often demonstrate clear hybrid behavior due to the cycling behavior of equipment, discontinuities in the derivatives of vapor-compression cycles, and discontinuities in the solar heat gains at sunrise and sunset. Nonlinear interactions between parameters can also cause poor simulation behavior, as when a change in the equipment model parameters results in a loss of cooling capacity and a corresponding significant increase in the room temperature for a given set of building model parameters. Thus, admissible parameter search space is very complex and difficult to capture except through a large investment of time by an expert user.

[Solution to Problem]

To mitigate the above-mentioned difficulties, some embodiments of present disclosure provides a calibration system that uses a failure-robust Bayesian optimization (FR-BO) algorithm that learns failure regions in the parameter space from online simulations and informs a Bayesian optimization (BO) algorithm to avoid the failure regions while searching for optimal parameters in the admissible parameter search space. This results in acceleration of the optimizer's convergence and prevents wastage of time trying to simulate parameters with high failure probabilities. In particular, the FR-BO uses simulated data to ascertain regions in the parameter space where the system is likely to fail. The regions correspond to combination of values of a plurality of parameters in the admissible range of the parameters (also referred to as "parameter space"). Further, some embodiments of the present disclosure provides an acquisition function based on a constrained BO acquisition functions that allow searching for optimizer candidates that not only fit operational data well but also are unlikely to result in simulation failures. The operational data is indicative of measurements of an operation of the industrial system.

In particular, in some embodiments, the calibration system calibrate a model of dynamics of the industrial system. The model explains changes of a state of the industrial system in response to controlling the industrial system according to a sequence of control inputs to fit the operational data indicative of measurements of the operation of the industrial system including values of the control inputs and corresponding values of the state of the industrial system. The calibration system simulates at least one operation of the industrial system multiple times, each simulation cycle includes execution of the model of the industrial system having different combinations of values of the parameters selected within an admissible range of values of the parameters to estimate success or failure of the simulation.

In some embodiments, the calibration system comprises a failure classifier, where the failure classifier is trained to define a likelihood of failure of the operation of the industrial system for the admissible range of values of parameters of the model using training data including the selected combinations of the values of the parameters labeled with the estimated success or failure of the simulation. The calibration system further comprises a probabilistic parameter-to-cost regressor, where the parameter-to-cost regressor is trained for mapping between various combinations of different values of the parameters of the model of the industrial system and their corresponding calibration errors.

In some embodiments, the parameter-to-cost regressor is trained iteratively until a termination condition is met. The probabilistic parameter-to-cost regressor is based on a Bayesian optimization technique. To perform an iteration, a calibration acquisition function of a first two order moments of the calibration errors and a combination of parameters having the maximum likelihood of minimizing a calibration error is identified according to the probabilistic parameter-to-cost regressor. The probabilistic parameter-to-cost regressor defines the first two order moments of the calibration errors. In some embodiments, the at least first two order moments may include a mean of the calibration error and a variance of the calibration error (also referred to as "a confidence range"). For example, for a given a combination of different values of the different parameters of the model of thermal dynamics, the probabilistic parameter-to-cost regressor provides not only a calibration error but also a confidence range around the calibration error. In response, the convergence rate of Bayesian optimization increases and the computational burden of the calibration system reduces.

For example, some embodiments aim to select a combination of the different parameters (also referred as 'data point') that need to be queried next. In such a case, querying the combination of the different parameters refers to simulation of a state of the industrial system on the model of the industrial system (such as a thermal state in an environment based on a model of thermal dynamics) with the combination of the different parameters and the received values of the control inputs corresponding to the received values of the state of the industrial system. Some embodiments use an acquisition function of the first two order moments of the calibration error to select the combination of the different parameters to query next.

The acquisition function uses the probabilistic mapping provided by the probabilistic parameter-to-cost regressor to select the combination of the different parameters to query next. In some embodiments, the acquisition function is maximized by the calibration system to select a combination of the different parameters having the largest likelihood of being a global minimum at the probabilistic parameter-to-cost regressor. Therefore, the acquisition function is used as a guidance to select the combination of different parameters to query next. To that end, the calibration system selects the combination of different parameters having the largest likelihood of being a global minimum at the probabilistic parameter-to-cost mapping according to the acquisition function of the first two order moments of the calibration errors.

Further, the calibration system determines a likelihood of failure of the operation of the industrial system for an admissible range of values of parameters from the selected combination of the different parameters of the model. To that end, the calibration system uses training data including values of the selected combinations of the parameters labeled with estimated success or failure of the simulation of the model. Based on the result of the likelihood, the probabilistic parameter-to-cost mapping is updated.

In the next iteration, the calibration system selects a new combination of different parameters having the largest likelihood of being a global minimum at the updated probabilistic parameter-to-cost mapping and estimates a likelihood of failure of the operation of the industrial system for the selected values of the new combination of different parameters. Subsequently, the calibration system again updates the updated probabilistic parameter-to-cost mapping based on the estimated calibration error for the new combination of different parameters, using the Bayesian optimization. Likewise, the probabilistic parameter-to-cost mapping is iteratively computed/updated until a termination condition is met. In an embodiment, the termination condition includes a number of iterations defined by a user.

The calibration system monitors if the termination condition is met. When the termination condition is met, the calibration system outputs an optimal combination of different parameters of the model of industrial system having the largest likelihood of being a global minimum at the probabilistic parameter-to-cost mapping.

The optimal combination of different parameters of the model of the industrial system may be determined in an offline manner (i.e., in advance). Additionally or alternatively, in some implementations, the optimal combination of different parameters of the model of the industrial system may be determined online, i.e., in real-time. For instance, the calibration system may be integrated with a Heating, ventilation, and air conditioning (HVAC) system installed to condition the environment, and the calibration system may output the optimal combination of different parameters during the operation of the HVAC system. Further, in some alternate embodiments, the optimal combination of different parameters of the model of thermal dynamics may be determined offline, and the model of thermal dynamics may be updated online. For instance, the optimal combination of different parameters of the model of thermal dynamics is determined offline and submitted to a controller of the HVAC system. The controller may determine control inputs to the actuator of the HVAC system based on the optimal combination of different parameters. However, when the physical structure of the building and/or the actuators of the HVAC system changes, the calibration system may update the model of thermal dynamics online by estimating a new optimal combination of different parameters in real time according to the change in the physical structure of the building and/or the actuators of the HVAC system. Further, the new optimal combination of different parameters may be submitted to the controller of the HVAC system. Consequently, the controller may determine control inputs to the actuator of the HVAC system based on the new optimal combination of different parameters.

In some embodiments, the Bayesian optimization includes the probabilistic parameter-to-cost regressor using a Gaussian process (GP) for providing the probabilistic mapping, and the acquisition function that exploits the probabilistic mapping provided by the probabilistic parameter-to-cost regressor to direct the querying of a consequent combination of the different parameters of the model of the industrial system.

Some embodiments are based on the recognition that inversion and determinant operations typically used in the GP result in cubic complexity with the number of data points, which implies that using the GP in moderate or high-dimensional parameter spaces is not practical, since finding optimal solutions in such spaces typically requires sampling and evaluating the calibration-cost function a large number of times.

Accordingly, one embodiment of the present disclosure provides a calibration system for calibrating a model of dynamics of an industrial system that explains changes of a state of the industrial system in response to controlling the industrial system according to a sequence of control inputs to fit operational data indicative of measurements of an operation of the industrial system including values of the control inputs and corresponding values of the state of the industrial system. The calibration system comprises: at least one processor; and memory having instructions stored thereon that, when executed by the at least one processor, cause the calibration system to: simulate an operation of the industrial system multiple times, each simulation cycle includes execution of the model of the industrial system having different combinations of values of parameters selected within an admissible range of values of the parameters to estimate success or failure of the simulation; train a failure classifier defining a likelihood of failure of the operation of the industrial system for the admissible range of values of parameters of the model using training data including the selected combinations of the values of the parameters labeled with the estimated success or failure of the simulation;

train a parameter-to-cost regressor for a probabilistic parameter-to-cost mapping between various combinations of different values of the parameters of the model of the industrial system and their corresponding calibration errors. The parameter-to-cost regressor is trained iteratively until a termination condition is met, and wherein to perform an iteration the at least one processor is configured to: execute an acquisition function of a first two order moments of the calibration errors configured to identify a combination of parameters having the maximum likelihood of minimizing the calibration errors according to the probabilistic parameter-to-cost mapping; update the identified combination of parameters with a failure-robust acquisition function adjusting the identified parameters according to the failure classifier to reduce the likelihood of the failure of the operation of the industrial system with the model having the updated parameters; simulate the operation of the industrial system controlled by the control inputs in the operational data with the model having the updated parameters to produce simulated states of the industrial system; and update the probabilistic parameter-to-cost mapping based on the updated parameters and calibration errors between the simulated states of the industrial system and corresponding states of the industrial system in the operational data; and calibrate, when the termination condition is met, the model of the industrial system with an optimal combination of the parameters having the largest likelihood of minimizing the calibration errors at the probabilistic parameter-to-cost mapping according to the acquisition function.

Accordingly, another embodiment of the present disclosure provides a calibration method for calibrating a model of dynamics of an industrial system that explains changes of a state of the industrial system in response to controlling the industrial system according to a sequence of control inputs to fit operational data indicative of measurements of an operation of the industrial system including values of the control inputs and corresponding values of the state of the industrial system. The calibration method comprises simulating an operation of the industrial system multiple times, each simulation cycle includes execution of the model of the industrial system having different combinations of values of parameters selected within an admissible range of values of the parameters to estimate success or failure of the simulation; training a failure classifier defining a likelihood of failure of the operation of the industrial system for the admissible range of values of parameters of the model using training data including the selected combinations of the values of the parameters labeled with the estimated success or failure of the simulation; training a parameter-to-cost regressor for a probabilistic parameter-to-cost mapping between various combinations of different values of the parameters of the model of the industrial system and their corresponding calibration errors. The parameter-to-cost regressor is trained iteratively until a termination condition is met. Further, to perform an iteration the calibration method comprises: executing an acquisition function of a first two order moments of the calibration errors identifying a combination of parameters having the maximum likelihood of minimizing the calibration errors according to the probabilistic parameter-to-cost mapping; updating the identified combination of parameters with a failure-robust acquisition function adjusting the identified parameters according to the failure classifier to reduce the likelihood of the failure of the operation of the industrial system with the model having the updated parameters; simulating the operation of the industrial system controlled by the control inputs in the operational data with the model having the updated parameters to produce simulated states of the industrial system; and updating the probabilistic parameter-to-cost mapping based on the updated parameters and calibration errors between the simulated states of the industrial system and corresponding states of the industrial system in the operational data; and calibrating, when the termination condition is met, the model of the industrial system with an optimal combination of the parameters having the largest likelihood of minimizing the calibration errors at the probabilistic parameter-to-cost mapping according to the acquisition function.

[Brief Description of Drawings]

[Fig. 1A]

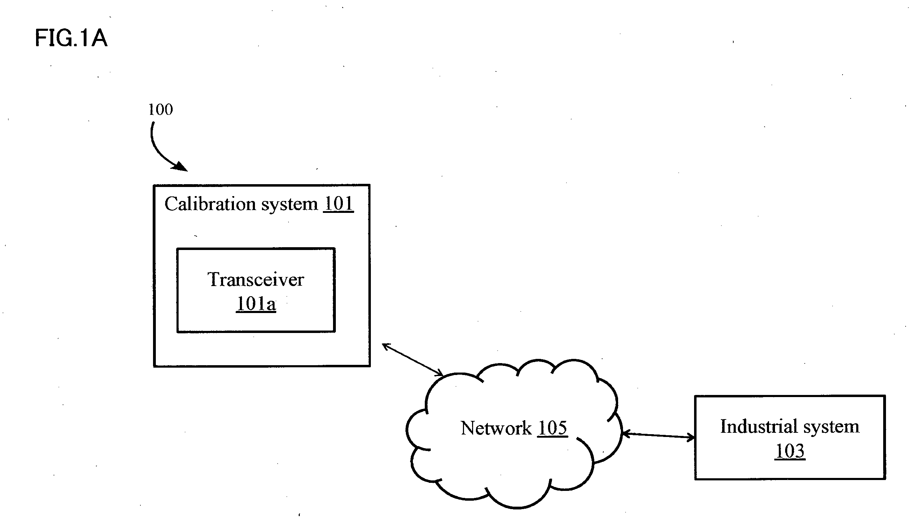

FIG. 1A illustrates a working environment of a calibration system for calibrating a model of an industrial system, according to some embodiments of the present disclosure.
[Fig. 1B]

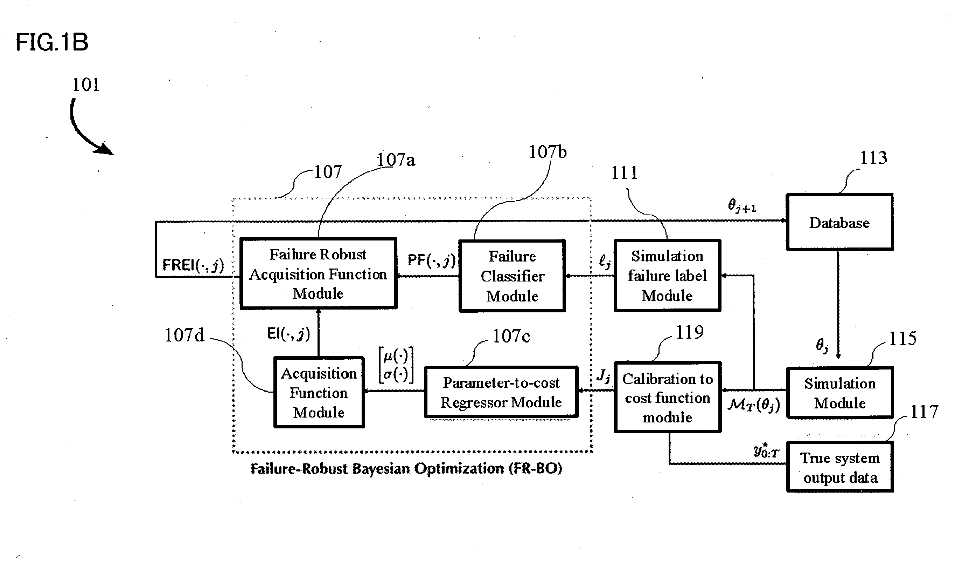

FIG. 1B illustrates modules of the calibration system, according to some embodiments of the present disclosure.
[Fig. 1C]

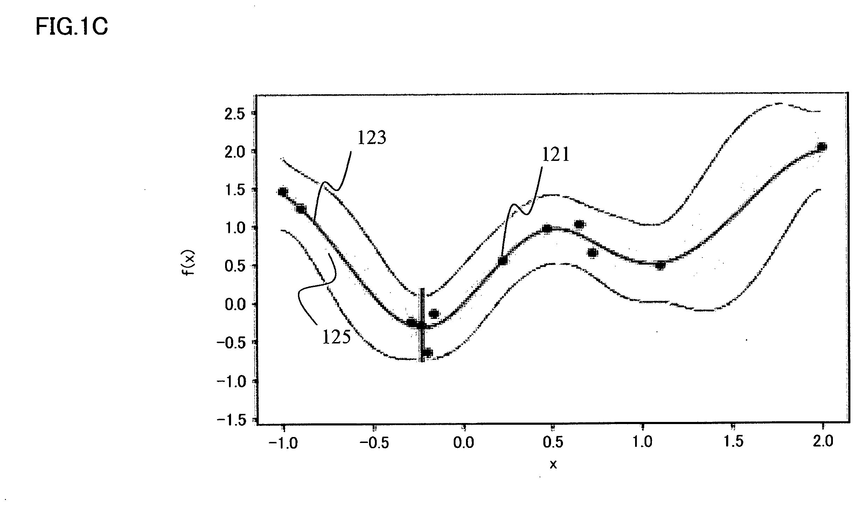

FIG. 1C illustrates a graphical representation of mean and confidence range output from a probabilistic parameter-to-cost regressor module of the calibration system, according to some embodiments of the present disclosure.
[Fig. 1D]

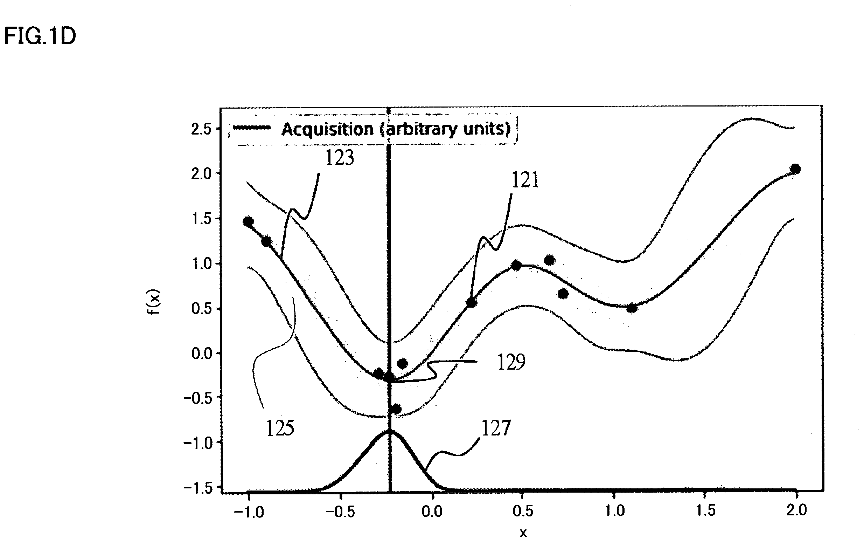

FIG. 1D illustrates a graphical representation of an acquisition function executed by the calibration system, according to some embodiments of the present disclosure.
[Fig. 2]

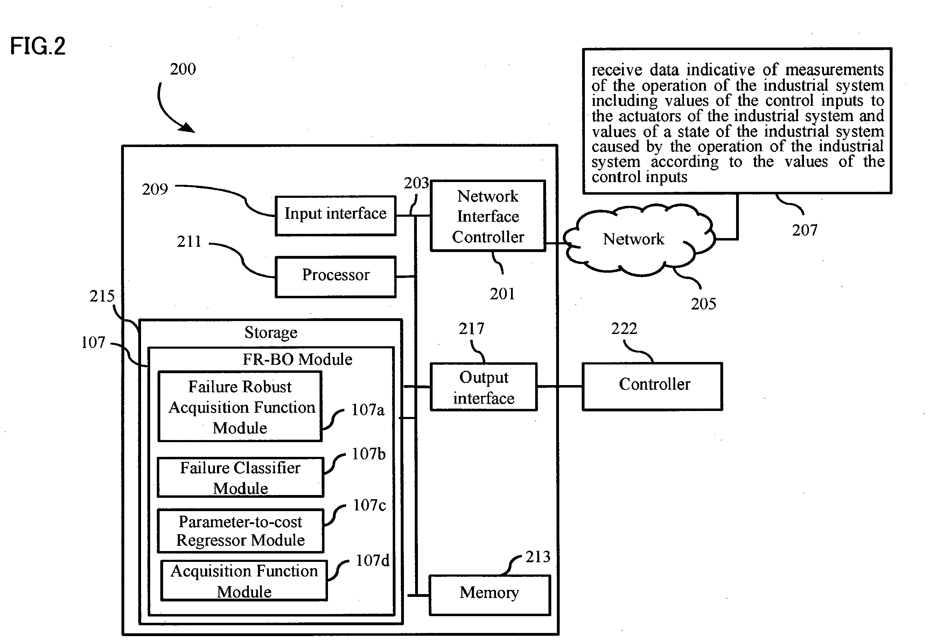

FIG. 2 illustrates a block diagram of the calibration system for calibrating the industrial system, some embodiments of the present disclosure.
[Fig. 3]

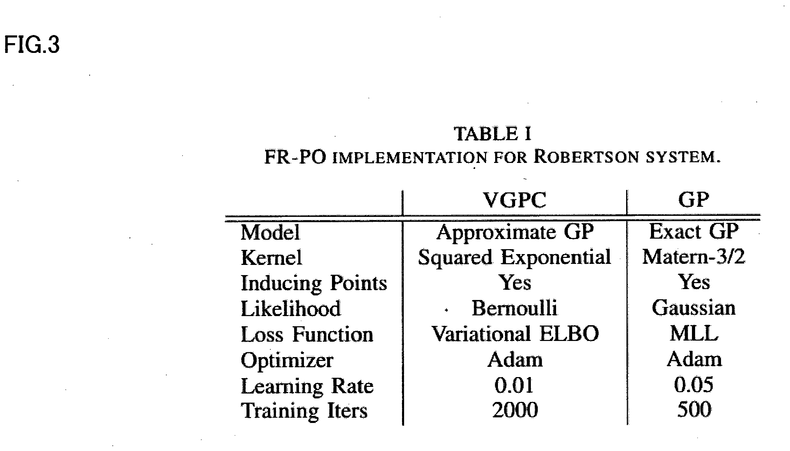

FIG. 3 illustrates a first table (Table I) including hyperparameters of a Robertson system for execution of a failure-robust Bayesian optimization (FR-BO) method, according to some embodiments of the present disclosure.
[Fig. 4A]

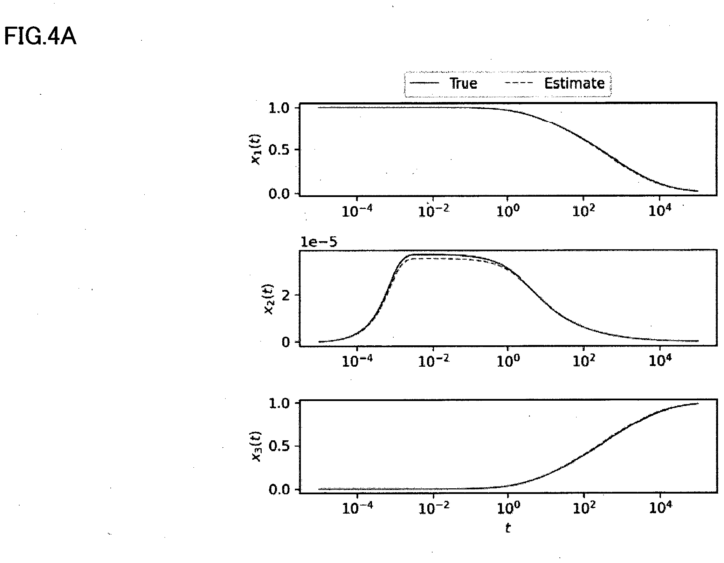

FIG. 4A illustrates graphical representation of comparison of true outputs and estimated outputs of the Robertson system, according to some embodiments of the present disclosure.
[Fig. 4B]

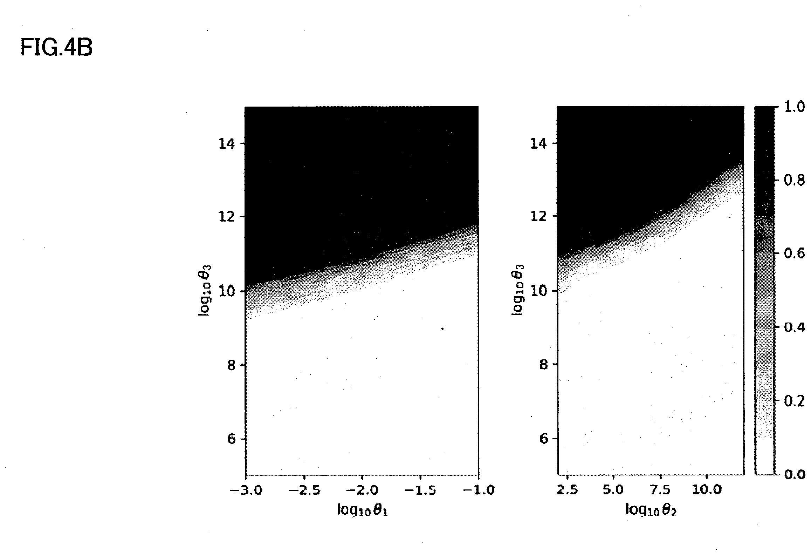

FIG. 4B illustrates slices of a parameter space with probabilities of failure estimated by a failure classifier module of the calibration system, according to some embodiments of the present disclosure.
[Fig. 5A]

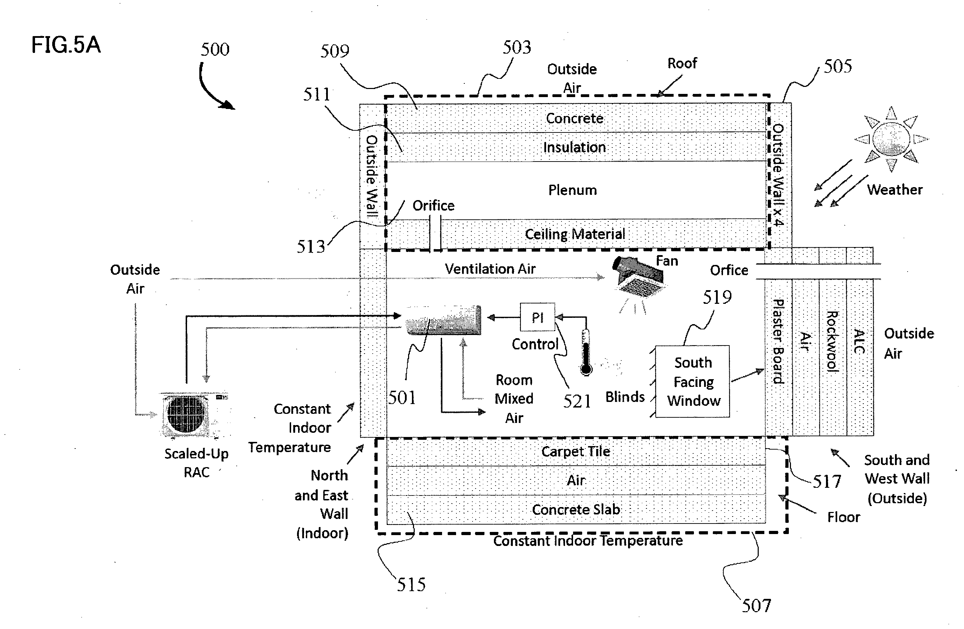

FIG. 5A illustrates a scenario including thermal dynamics of a building and a Heating, ventilation, and air conditioning (HVAC) system to be calibrated by the calibration system, according to an example embodiment of the present disclosure.
[Fig. 5B]

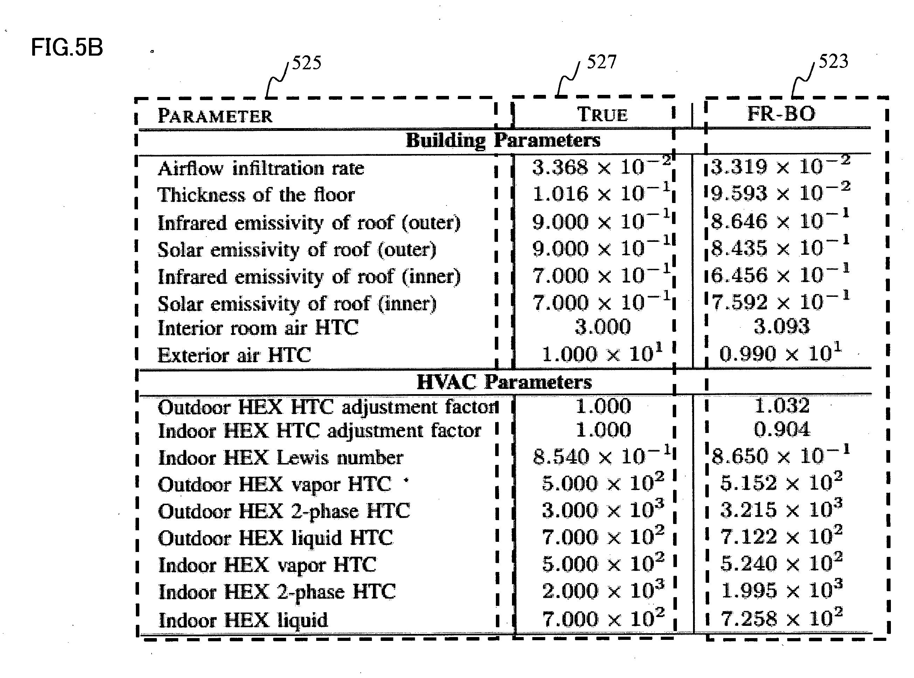

FIG 5B illustrates a second table (Table II) including comparison between best estimates of parameters after predetermined number of iterations during calibration and true values of parameters of the building and the HVAC system, according to an example embodiment of the present disclosure.
[Fig. 5C]

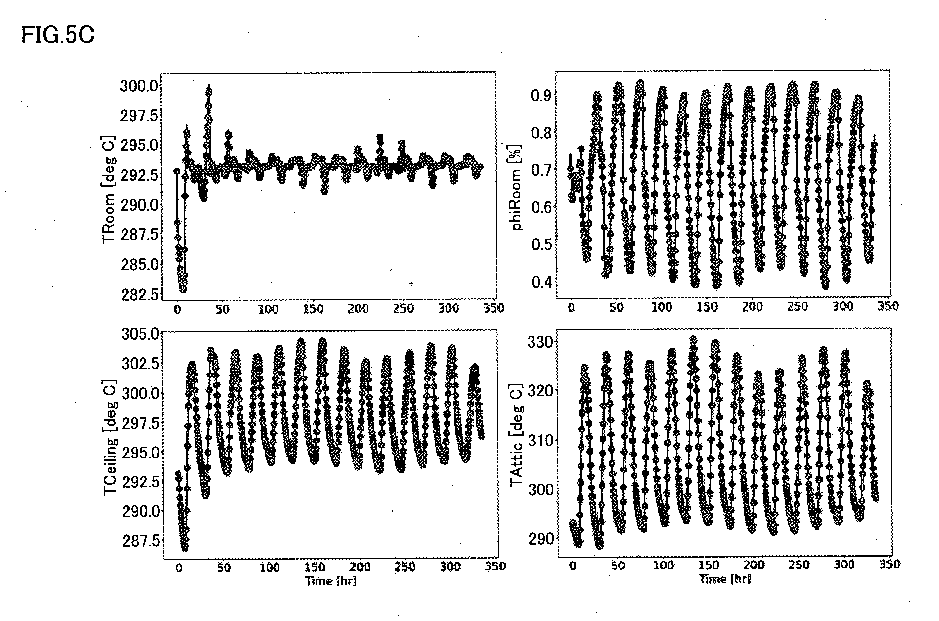

FIG. 5C illustrates estimated outputs and true outputs associated with the building, according to an example embodiment of the present disclosure.
[Fig. 5D]

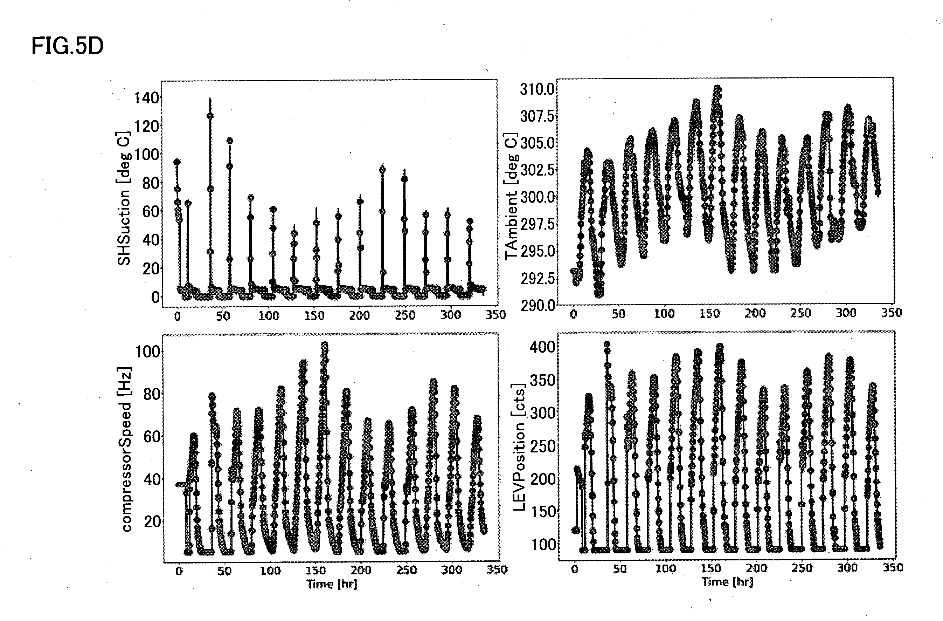

FIG. 5D illustrates estimated outputs and true outputs associated with the HVAC system, according to an example embodiment of the present disclosure.
[Fig. 6]

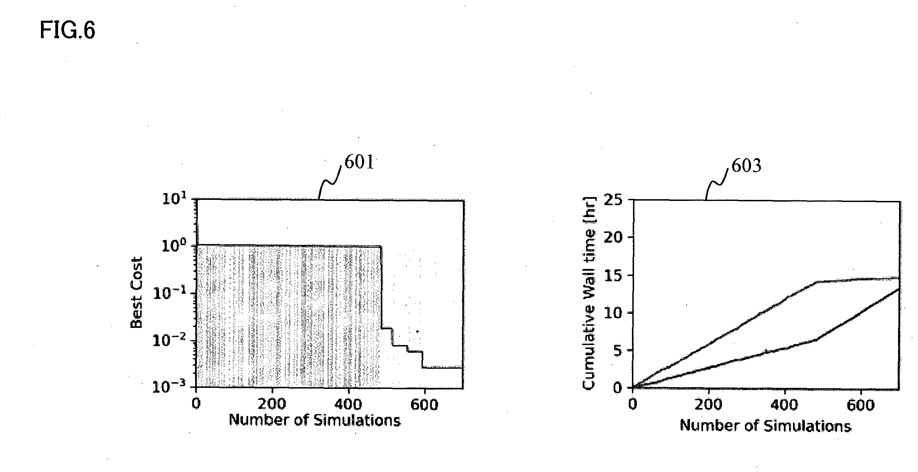

FIG. 6 illustrates regret and number of simulation failure of an integrated building system including the HVAC system and the building, according to an example embodiment of the present disclosure.
[Fig. 7]

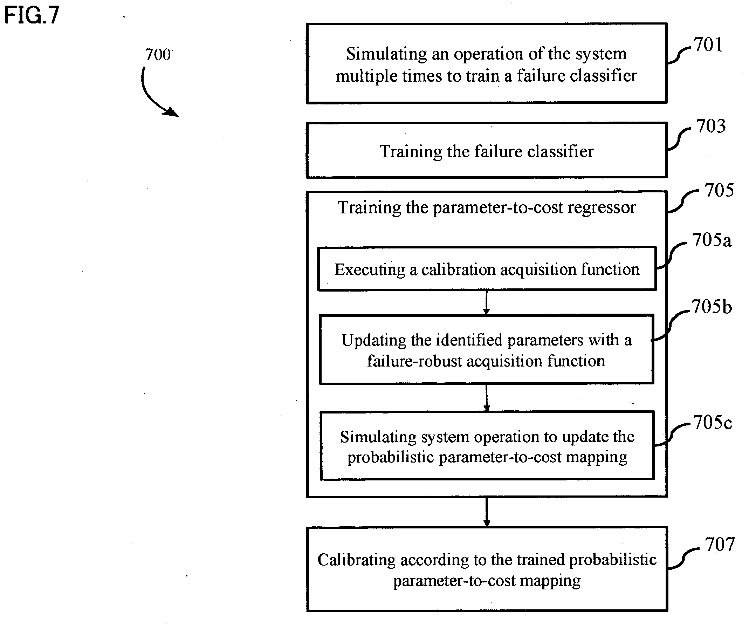

FIG. 7 illustrates steps of a calibration method for calibrating a model of the industrial system, according to an example embodiment of the present disclosure.
[Fig. 8]

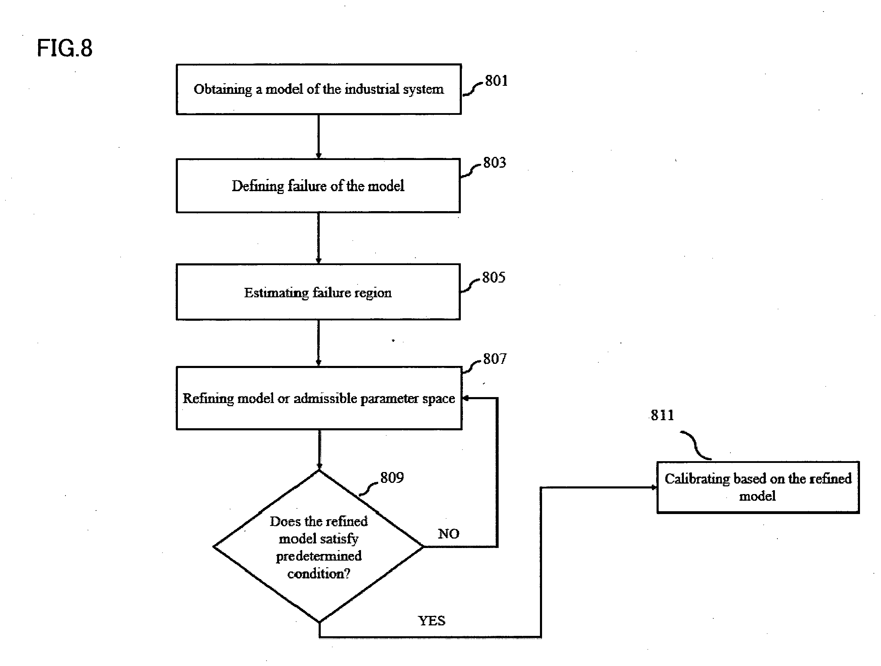

FIG. 8 illustrates steps of a calibration method for refining admissible parameter space of the simulation model based on the failure region, according to an example embodiment.

[Description of Embodiments]

In the following description, for purposes of explanation, numerous specific details are set forth in order to provide a thorough understanding of the present disclosure. It will be apparent, however, to one skilled in the art that the present disclosure may be practiced without these specific details. In other instances, apparatuses and methods are shown in block diagram form only in order to avoid obscuring the present disclosure.
As used in this specification and claims, the terms "for example," "for instance," and "such as," and the verbs "comprising," "having," "including," and their other verb forms, when used in conjunction with a listing of one or more components or other items, are each to be construed as open ended, meaning that that the listing is not to be considered as excluding other, additional components or items. The term "based on" means at least partially based on. Further, it is to be understood that the phraseology and terminology employed herein are for the purpose of the description and should not be regarded as limiting. Any heading utilized within this description is for convenience only and has no legal or limiting effect.
Generally, simulation is a very helpful and valuable work tool. It can be used in industrial field allowing a system's behavior to be learnt and tested. The simulation provides a low cost, secure, and fast analysis tool. It also provides benefits, which can be reached with many different system configurations. With advancement in modeling and computation, high-fidelity digital models capable of simulating the dynamics of a wide range of industrial systems are developed. These models often require calibration, or the estimation of an optimal set of parameters. Practical calibration methods are often designed to estimate near-optimal parameters without extensive simulations to avoid the expenditure of significant time and resources without a corresponding increase in simulation performance.
Accordingly, different methods are used for learning parameters to avoid excessive time and resources wasted in simulation of these models. However, learning the parameters from limited data is challenging. For instance, a Bayesian optimization (BO) method is an effective method for learning the parameters based on limited data in a few-shot manner: that is, with markedly fewer evaluations of the cost function (equivalently, model simulations) than population-based methods. Furthermore, Bayesian optimization inherently balances exploration and exploitation and can incorporate non-convex constraints via modified acquisition functions making Bayesian optimization a powerful and easy-to-use learner for model calibration.

Some embodiments of the present disclosure are based on the realization that the model may not be simulated forward in time over any duration of interest for any set of parameters within an admissible search domain. Therefore, the model simulations can fail to complete in the duration of interest.

Further, some embodiments of the present disclosure are based on the realization that simulation data associated with simulation failure of the model can be used to learn optimal values of parameters, in the entire admissible space of the parameters, that have less likelihood of failure. Thus, the model can be trained to select values of a parameter that decreases chances of the simulation failure and consequently decreases the excessive expenditure of resources on the simulation failure.

Accordingly, the present disclosure provides a calibration system based on a failure-robust Bayesian optimization (FR-BO) method. The FR-BO method comprises different modules that use simulated data to ascertain regions in the parameter space where the industrial system is likely to fail. Subsequently, a specific acquisition function is designed based on constrained BO acquisition functions allowing search for optimizer candidates that not only fit the operational data well, but also are unlikely to result in simulation failures. The calibration system with FR-BO is described further with reference to FIG. 1A and FIG. 1B.

FIG. 1A illustrates a working environment 100 of a calibration system 101 for calibrating a model of an industrial system 103, according to some embodiments of the present disclosure. The model of the industrial system 103 mimics dynamics of the industrial system 103. In particular, the model of the industrial system 103 corresponds to a software model (also called as a mathematical model). In the working environment 100 of the calibration system, the calibration system 101 and the industrial system 103 are coupled to each other via a network 105. Components described in the working environment 100 may be further broken down into more than one component and/or combined in any suitable arrangement. Further, one or more components may be rearranged, changed, added, and/or removed.

In some embodiments, the calibration system 100 includes a transceiver 101a configured to exchange information over the network 105. For example, the transceiver 101a receives a model of the industrial system 103 and data indicative of measurements of operations of the industrial system 103, via the network 105. The industrial system 103 may correspond to any system to be controlled such as a heating, ventilating, and air conditioning (HVAC) system.

The industrial system 103 such as the HVAC system includes actuators including an indoor fan, an outdoor fan, an expansion valve actuator, and the like. The actuators may be controlled according to corresponding control inputs, e.g., a speed of the indoor fan, a speed of the outdoor fan, a position of the expansion valve, a speed of a compressor, and the like. Additionally or alternatively, in some implementations, the control inputs may include a value of temperature and/or a value of humidity. In response to controlling the actuators of the HVAC system according to the corresponding control inputs, thermal state in an environment change.

According to another embodiment, the control inputs are determined based on different parameters of the model of the industrial system 103. The model of the industrial system 103 is a digital twin model of dynamics of the operation of the industrial system 103, such that the model of the industrial system 103 explains the change of the state of the industrial system 103. Thus, the control inputs are variable, and the values of the parameters are fixed. For example, for a digital twin model corresponding to an air-conditioning (AC) system control inputs may comprise temperature required in a room (e.g., 23 degrees), speed of the fan, and the likes which are variable. However, a parameter may comprise a volume of the room to be air conditioned, where the volume of the room is fixed.

For example, in the HVAC system, the different parameters of the model of thermal dynamics define a physical structure of one or combination of the building, the actuators of the HVAC system, and an arrangement of the HVAC system to condition the environment. For instance, the different parameters of the model of thermal dynamics include parameters of a building, using the HVAC system, such as a thickness of a floor of the building, an infrared emissivity of a roof of the building, a solar emissivity of the roof of the building, an airflow infiltration rate, interior room air heat transfer coefficient (HTC), exterior air HTC, and the like. Additionally, the different parameters of the model of thermal dynamics may include HVAC parameters such as an outdoor HEX heat transfer coefficient (HTC) adjustment factor, an indoor HEX HTC adjustment factor, an indoor HEX Lewis number, an outdoor HEX vapor HTC, an indoor HEX vapor HTC, an outdoor HEX liquid HTC, an indoor HEX liquid, an outdoor HEX 2-phase HTC, an indoor HEX 2-phase HTC, and the like.

In some embodiments, the network 105 may be a wireless communication network, such as cellular, Wi-Fi, internet, local area networks, or the like. In some alternative embodiments, the network 105 may be a wired communication network. The calibration system 101 may execute the model of the industrial system 103 multiple times to obtain simulation data. The calibration system 101 uses the FR-BO method to learn, from simulation data, values of parameters for different combinations that increases a likelihood of failure of simulation of the model. In some embodiments, the calibration system 101 may be pre-trained on the simulation data of the model to determine optimal combination of values of the different parameters that can lead to successful simulation.

Further, the transceiver 101a transmits the optimal combination of the different parameters to the industrial system 103, via the network 105. Additionally, in some embodiments, the industrial system 103 may include a controller that determines control inputs for actuators of the industrial system 103, based on the optimal combination of the different parameters received from the calibration system 101. Further, states of the actuators of the industrial system 103 may be controlled based on the control inputs in order to obtain output or a specific state of the industrial system 103 desired by a user.

Further, a mathematical formulation used for modelling the industrial system 103 and challenges faced during determination of optimal values of parameters for combinations of different parameters of the model are elaborated as follows.

Assume that a general model of a dynamical system (also referred to as "the industrial system 103") is denoted by equation (1):

$$y_{0:T} = M_T(\theta) \qquad\qquad (1)$$

where $y_{0:T}$ represents output of a model $M_T(\theta)$ of the dynamical system, the constant parameters of the model are described by $\theta \in \Theta \subset \mathbb{R}^{n_\theta}$. Further, assume that the admissible set of parameters $\Theta$ is known. For instance, $\Theta$ could denote a set of upper and lower bounds on parameters obtained from archived data or domain knowledge. The model $M_T(\theta)$ is a like a black-box, where a user may not be able to tune parameters of the model $M_T(\theta)$.

Therefore, range of $\Theta$ of the parameters may be purely a guess. Consequently, the range of $\Theta$ is not tight around the true parameter set.

Further, the output vector $y_{0:T} \in \mathbb{R}^{n_y \times T}$ comprises all measured outputs from the dynamical system obtained over a time period [0, T]. The model $M_T(\theta)$ is simulated forward with a fixed (and admissible) set of parameters $\theta$ that yields a vector of outputs $y_{0:T} = [y_0\ y_1 \ldots y_t \ldots y_T]$, with each output measurements $y_t \in \mathbb{R}^{n_y}$.

In an example embodiment, a model of a state-space representation of a nonlinear dynamical system with state x, initial condition $x_0$, control input u, and parameters $\theta_1$ and $\theta_2$ can be modeled as:

$$\dot{x} = f_{ODE}(x, u, \theta_1), \qquad \dot{y} = h_{ODE}(x, u, \theta_2)$$

Given a set of parameters $\theta = \{\theta_1\} \cup \{\theta_2\}$, the nonlinear dynamical system of ordinary differential equations is numerically integrated (i.e., simulated) forward for $t \in [0, T]$, and subsequently the sequence of outputs $y_{0:T}$ is obtained. Thus, the system dynamics of the dynamical systems (linear and/or nonlinear) can be represented by a parameter-to-output map as in equation (1).

In some scenarios, a class of dynamical systems is modeled by using differential algebraic equations:

$$0 = f_{DAE}(\dot{x}, x, u, \theta_1), \qquad \dot{y} = h_{DAE}(x, u, \theta_2)$$

can also be modeled by equation (1).

It is an objective of some embodiments to estimate parameters $\theta^*$ such that the modeling error ($\varepsilon$) represented mathematically as in equation (2) below can be minimized:

$$\varepsilon \triangleq y_{0:T}^* - M_T(\theta^*), \qquad\qquad (2)$$

where $y_{0:T}^*$ denotes the measured outputs collected from a real system, and $M_T(\theta^*)$ denotes the estimated outputs from the model $M_T(\theta)$ using the estimated parameters $\theta^*$.

The parameters that minimize the modeling error is estimated by optimizing a calibration cost function $J(y_{0:T}^*, M_T(\theta))$ to yield the optimal parameters

$$\theta^* = \operatorname*{argmin}_{\theta \in \Theta} J(y_{0:T}^*, M_T(\theta)) \qquad\qquad (3)$$

To that end, some embodiments use BO method which is effective at finding global optima of functions of which gradients are not available and are expensive to evaluate, as is the case in black-box model calibration.

Some embodiments are based on the realization that conventional methods that are used for solving equation (3) assume that $M_T(\theta)$ exists for every $\theta \in \Theta$, which implies that the model $M_T(\theta)$ can be simulated from the time-span of interest [0, T] for any parameter in the admissible parameter space $\Theta$. However, this is not always the case and simulations of the model $M_T(\theta)$ can fail to complete in a timespan of interest.

Simulation failure includes at least one case of: (i) a numerical integration schemes terminates prematurely due to parameter-dependent stiffness in the underlying dynamics; (ii) the underlying dynamics do not have a solution due to parameters not adhering to basic validity assumptions, for instance, if the underlying system has $\log(1-\theta^2)$ terms and $\{|\theta| > 1\} \subset \Theta$; (iii) a subset of the $\Theta$ renders the underlying dynamics unstable (e.g., $\dot{x} = \theta x^2$ for $\theta > 0$) or a controller/estimator designed using an approximation of the model (such as a linearization) makes the closed-loop dynamics unstable; and (iv) the simulation takes exorbitantly long for some parameters so the code is terminated based on heuristics after a prefixed termination time.

In some cases, models tend to exhibit simulation failures in a failure region $\Theta_F \subset \Theta$ and the failure does not always occur instantaneously. For instance, in the case (iv), the failure is flagged after a designated termination time that could be large. Consequently, data-driven algorithms that have been designed agnostic to simulation failure could potentially continue to compute optimizer candidates that reside in the failure region $\Theta_F$. In such cases, the algorithms may be deteriorated in performance and lead to large amounts of computational resources and CPU time being wasted.

To overcome the above-mentioned problems, the present disclosure provides the calibration system 101 that is based on a data-driven parameter estimation framework. The calibration system 101 learns from simulation failures and incorporates information from the simulation failure(s) to increase the probability of selecting sets of parameters that lead to successful simulations, thereby optimizing equation (3) without wasting computational resources and CPU time. The data-driven framework is based on the critical assumption that estimated parameters (0*) do not belong to the failure region ($\Theta_F$) (i.e., $\theta^* \notin \Theta_F$).

The calibration system 101 uses the failure-robust Bayesian optimization approach (implemented using the FR-BO module 107), where initially a probabilistic classifier is designed that estimates the failure region $\Theta_F$ from simulation data obtained by sampling within $\Theta$. Further, an entropy-based active learning method is used to reduce sample complexity for evaluation of different functions (such as $f_{ODE}(x, u, \theta_1)$, $h_{ODE}(x, u, \theta_1)$, or the like) to estimate the failure region $\Theta_F$. After estimating $\hat{\Theta}_F$ and the failure region $\Theta_F$, the probabilistic classifier provides probabilities of simulation failure over the entire parameter space of interest $\Theta$. These probabilities are embedded into a Bayesian optimization framework using a constrained acquisition function, ensuring that optimizer candidates are biased to reside outside the estimated failure region $\hat{\Theta}_F$. Thus, the probabilistic classifier is trained to suggest optimizer candidates that lie within the set difference $\Theta \backslash \Theta F$ with high probability.

FIG. 1B illustrates modules of the calibration system 101, according to some embodiments of the present disclosure. The calibration system 101 is used for calibrating the model of dynamics of the industrial system 103. The model is calibrated in such a way that the model can explain changes of a state of the industrial system 103 in response to controlling the industrial system 103 according to a sequence of control inputs to fit operational data. The operation data is indicative of measurements of an operation of the industrial system 103 including values of the control inputs and corresponding values of the state of the industrial system 103.

As shown in the FIG. 1B, the calibration system 101 comprises a simulation model ($M_T(\theta)$) 115 which is used to simulate an operation of the industrial system 103 multiple times. In some cases, the simulation model 115 may be provided to the calibration system 101 by a user. Further, the simulation model 115 is simulated multiple times for different combinations of parameters, where values of parameters may be different during each simulation cycle. The simulation model obtains values $\theta_j$ of different combination of parameters for each simulation cycle from a database 113, where the database 113 is configured to store operational data $D_j$ comprising different values of each parameter in their admissible range. Each simulation cycle includes execution of the simulation model 115 with different combinations of values $\theta_j$ of the parameters selected within the admissible range of values of the parameters. In an example embodiment, the values $\theta_j$ for simulating the simulation model 115 may be provided by the user.

Results of the simulations comprises at least one of successful simulation of the simulation model 115 for the selected values of the combination of the parameters or failure of the simulation of the simulation model 115 for the selected values of the combination of the parameters. Further, the results of the simulations of the simulation model 115 are provided to a simulation failure label module 111 of the calibration system 101. The simulation failure label module 111 is configured to label ($\ell_j$) different combinations of parameters used in multiple simulations of the simulation model 115 based on success or failure of the simulation. For example, the simulation failure label module 111 may be configured to label a first set of combinations of parameters with corresponding values as successful simulation when the simulation is successful and a second set of combinations of parameters with corresponding values as unsuccessful simulation when the simulation is unsuccessful.

Further, based on the result of the calibration, a calibration error is calculated. The calibration system 101 is configured to minimize calibration error to obtain values for optimal combination of parameters. To that end, the calibration system 101 comprises a calibration cost function module 119 configured to calculate the calibration error ($J_j$) (also referred to as "cost function") between the simulated states of the model ($M_T(\theta_j)$) of the industrial system 103 and corresponding states of the industrial system 103 in the operational data i.e., true system output data ( $y^*_{0:7}$ ) 117.

The calculated cost function ($J_j$) and the labels ($\ell_j$) generated by the calibration cost function module 119 and the simulation failure label module 111, respectively, are provided to the FR-BO module 107. The FR-BO module 107 is trained iteratively based on the cost function ($J_j$) and the labels ($\ell_j$) to obtain a probabilistic mapping between various combinations of different values of the parameters of the model and their corresponding cost functions. The FR-BO module 107 is executed iteratively until a termination condition is met, where the termination condition may be pre-defined by the user. Further, during each iteration, the calibration system 101 determines optimal values of combinations of different parameters that lead to successful simulations, where the optimal values of combinations of different parameters have the largest likelihood of minimizing the calibration error at the probabilistic mapping. Thus, FR-BO module 107 avoids the simulation failure of the model ($M_T(\theta)$) by determining the optimal values of combinations of different parameters.

To obtain the probabilistic parameter-to-cost mapping, the FR-BO module 107 uses a parameter-to-cost regressor module 107c, where the parameter-to-cost regressor module 107c is trained iteratively, until the termination condition is met, to map between various combinations of different values of the parameters of the model ($M_T(\theta_j)$) and corresponding calibration errors. The parameter-to-cost regressor module 107c is further configured to determine a mean $\mu$ (a first order moment) and a standard deviation $\sigma$ (a second order moment) of the calibration errors, which is described further with reference to FIG. 1C.

Further, based on the labels $\ell_j$, the calibration system 101 is configured to estimate likelihoods of simulation success and failure on $\Theta$ of different values of the parameters by learning the set $\Theta_F$. To that end, the calibration system 101 comprises a failure classifier module 107b, where the failure classifier module 107b is trained, in each iteration "j" of the FR-BO, to define a likelihood of failure (also referred to as "probability of failure PF") of the operation of the industrial system 103 for the admissible range $\Theta$ of values ($\theta_j$) of parameters of the simulation model 111 using training data. The training data includes the selected combinations of the values of the parameters labeled with the estimated success or failure of the simulation. Thus, based on the different combination of the parameters, the failure classifier module 107b estimates failure region $\Theta_F$. The failure region $\Theta_F$ is a subregion of the admissible parameter space $\Theta$ where the simulation model 111 will fail to simulate for one or more combinations of parameters.

Based on the estimation of the failure region $\Theta_F$, the simulation model 111 is refined by refining the admissible range (also referred to as "admissible parameter space") $\Theta$ of the parameters.

In some embodiments, the calibration system 101 obtains predetermined conditions for the failure region $\Theta_F$ corresponding to the simulation model 111. The calibration system 101 is further configured to determine whether the failure region $\Theta_F$ of the refined simulation model 111 satisfies the predetermined conditions for the failure region. The predetermined conditions for the failure region $\Theta_F$ may define size of the failure region $\Theta_F$ within the admissible parameter space $\Theta$ corresponding to the different combinations of the parameters. When it is determined that the failure region of the refined model does not satisfy the predetermined condition, for example, the failure region is not equal to or less than the predefined size of the failure region $\Theta_F$, the calibration system 101 iteratively refines the model 111 and re-estimate the failure region until the estimated failure region $\Theta_F$ satisfies the predetermined condition for the failure region $\Theta_F$.

The calibration system 101 further comprises an acquisition function module 107d that uses an acquisition function to choose parameters such that the failure region $\Theta_F$ is avoided. To that end, the acquisition function module 107d obtains the first two order moments of the calibration errors from the parameter-to-cost regressor module 107c and executes the acquisition function for the first two order moments. The acquisition function is executed to identify a combination of parameters having the maximum likelihood of minimizing a calibration error according to the probabilistic parameter-to-cost mapping. In some embodiments, the acquisition function of the first two order moments of the calibration error is used to select the combination of the different parameters to query the next combination of the different parameters.

In particular, the acquisition function module 107d uses the probabilistic mapping provided by the parameter-to-cost regressor module 107c to select the combination of the different parameters to query next, which is described further with reference to FIG. 1D.

In an embodiment, the acquisition function is maximized, in each iteration "j" of the FR-BO, by the calibration system 101 to select a combination of the different parameters having the largest likelihood of being a global minimum at the parameter-to-cost mapping provided by the parameter-to-cost regressor module 107c. Therefore, the acquisition function is used as a guidance to select the combination of different parameters to query next. To that end, the calibration system 101 selects the combination of different parameters having the largest likelihood of being a global minimum at the probabilistic parameter-to-cost mapping according to the acquisition function of the first two order moments of the calibration errors. The acquisition function module 107d uses at least one of the acquisition functions: expected improvement (EI), the lower confidence bound, or entropy search. In a preferred embodiment, the acquisition function module 107d uses the EI acquisition function.

Further, the calibration system 101 comprises a failure-robust acquisition function module 107a that is configured to adjust values of the parameters in the identified combination of parameters based on the output of the acquisition function module 107d and output of the failure classifier module 107b. Thus, the failure-robust acquisition function module 107a incorporates probabilistic output into the acquisition function to yield failure-robust EI (FREI) acquisition function. Further, the updated values of the combination of parameters are used for training the FR-BO module 107 in next iteration. The updated values of the combination of the parameters ($\theta_j$) are stored in the databases 113 and are used for simulating the simulation model 115.

In this way the FR-BO module 107 is trained iteratively on the simulation data until the termination condition is met.

**Failure robust Bayesian optimization (FR-BO) algorithm:**

The FR-BO module 107 implements the FR-BO algorithm using modules 107a-107d (as shown in FIG. 1B). The FR-BO module 107 learns the failure region from data obtained during simulations via a probabilistic classifier such as a scalable variational Gaussian process classifier (VGPC). The probabilities of simulation failure or simulation success are used via active learning method to accelerate the Bayesian optimization step, and further, to guide where best to simulate the dynamical model $M_T(\theta)$ to get better estimates of the failure region boundaries. Further, information from the VGPC is incorporated via a constraint weighted acquisition function to ensure that parameters are chosen avoiding failure regions.

To that end, the FR-BO module 107 is trained to learn the failure regions. Since the admissible parameter search domain $\Theta$ is known, by sampling on admissible parameter space (or $\Theta$), the training data is obtained for learning the failure region subset $\Theta_F$. Further, most informative (in an information-theoretic sense) parameters $\Theta$ are selected from the admissible parameter search domain $\Theta$ (i.e., $\theta \in \Theta$). For instance, the training data is initially available obtained by random sampling on $\Theta$. Based on the training data, the FR-BO module 107 is trained iteratively until the termination condition is met i.e., the failure classifier 107b and the parameter-to-cost regressor 107c are trained iteratively.

At the j-th iteration of training the failure classifier module 107b, the training data $D_j$ comprises a sequence of parameters $\theta_{[0:j]}$, a sequence of corresponding simulation failure labels $\ell_{[0:j]}$, and cost function values $J_{[0:j]}$.

$$D_j = \theta_{[0:j]} \times \ell_{[0:j]} \times J_{[0:j]}$$

Each failure label is denoted as "+1" if there is simulation failure and donated as "-1" if no simulation failure. For failed simulations, the corresponding cost function value is set to an undefined value (or null value), e.g., NaN. If the simulation is successful, the cost function yields a real-valued scalar.

Further, at the j-th iteration of learning the failure region, $\theta$ and labels $\ell$ of the dataset $D_j$ are utilized to set a Gaussian process prior (i.e., prior probability distribution function) at the observed parameter sets. This can be written as $\phi \sim N(0, K_j)$, where $\phi_j$ is the prior function using $D_j$ and with a user-specified kernel function $K(\cdot, )$ such as a squared exponential kernel or a Matern kernel.

$$K_j = \begin{bmatrix} \mathcal{K}(\theta_0, \theta_0) & \cdots & \mathcal{K}(\theta_0, \theta_j) \\ \vdots & \ddots & \vdots \\ \mathcal{K}(\theta_j, \theta_0) & \cdots & \mathcal{K}(\theta_j, \theta_j) \end{bmatrix} \qquad (4)$$

To perform classification of the combination of parameters into simulation success and simulation failure with this prior, the function $\phi$ is transformed through a squashing function such as the cumulative density function of a zero-mean unit-variance normal distribution $\gamma(\cdot) := N(\cdot|0, 1)$, given by $\Gamma(z) = \int_{-\infty}^{z} \gamma(\alpha) \, d\alpha$. Consequently, a Bernoulli

distribution can be used to represent a likelihood function conditioned on the transformed data as follows:

$$\mathcal{B}(\ell_j | \Gamma(\phi_j)) = \Gamma(\phi_j)^{\ell_j} \cdot (1 - \Gamma(\phi_j))$$

The joint distribution of $\ell$ and $\phi$ thus becomes

$$p(\ell, \phi) = \prod_{r=1}^{j} \mathcal{B}(\ell_j | \Gamma(\phi_j)) N(0, K_j) \qquad (5)$$

To optimize hyperparameters and perform inference two more distributions are required: the marginal likelihood $PF(\ell, j)$ and the posterior $p(\phi | \ell, j)$. Both of these distributions require the inversion of the $j \times j$ kernel matrix (represented in equation (4)). However, the inverted kernel matrix incurs cubic complexity and does not scale well to the large values of $j$ that may be required for FR-BO to compute good solutions.

To that end, approximation methods that leverage pseudo-inputs are used. The approximation methods are also known as inducing points. Inducing points $\tilde{\theta} \in \Theta$ are design variables that are augmented with the latent variables $\phi_j$ that also respect the Gaussian prior and yields a joint distribution

$$(\phi, \tilde{\phi}) \sim N \left( 0, \begin{bmatrix} K_j & \tilde{K}_{jm} \\ K_{jm}^{\top} & \tilde{K}_m \end{bmatrix} \right)$$

$\tilde{K}_{jm}$ denotes the covariance matrix computed by evaluating the kernel across $j$ data points and $m$ inducing inputs, while $\tilde{K}_m$ denotes the covariance matrix computed by evaluating the kernel on all pairs of the inducing inputs. By exploiting the properties of the Gaussian distribution, the joint distribution of the latent variables and the inducing variables are rewritten as:

$$p(\ell, \phi, \tilde{\phi}) = p(\ell | \phi) p(\phi | \tilde{\phi}) p(\tilde{\phi})$$

Further, to get a variational approximation of the likelihood, the following inequality is used:

$$\log p(\ell | \tilde{\phi}) \geq E_{p(\phi | \tilde{\phi})} [\log p(\ell | \phi)]$$

Further, to get the variational lower bound, a variational distribution q is defined

$$\log p(\ell) \geq E_{q(\phi)} [\log p(\ell | \phi)] - KL[q(\tilde{\phi}) || p(\tilde{\phi})] \qquad (6)$$

The optimal hyperparameters for the VGPC can be obtained by minimizing the loss function formed by the negative of the right hand side of inequality in equation (6) by using quadrature methods. If it is assumed that $q \sim N(\tilde{\phi} | \mu, \Sigma)$, then

$$q(\phi) = N(L\tilde{\mu}, K_j + L(\tilde{\Sigma} - \tilde{K}_m)L^{\top}), \qquad (7)$$

with $L = \tilde{K}_{jm} \tilde{K}_m^{-1}$, which is an $m \times m$ matrix, and eventually $m \ll j$, so this matrix is cheaper to invert, which makes this method scalable.

In some embodiments, for inference at a set of test points $\{\theta_*\}$, the set of test points $\{\theta_*\}$ is transformed into $\{\phi_*\}$, and the approximate posterior is then given by $p(\phi_* | \ell) = \int p(\phi^* | \tilde{\phi}) q(\tilde{\phi}) d\tilde{\phi}$, which can be computed in a manner similar to equation (7). Initially, when the failure region is not correctly estimated, informative elements of $\{\theta_*\}$ are selected that

can yield good estimates of $\Theta_F$ without exhaustive sampling. To this end, the calibration system 101 uses an active learning strategy, where the most informative $\theta_j^* \in \theta_*$ is selected based on the maximum entropy of the posterior distribution. Since the mean and variance of the posterior $p(\phi_*| \ell)$ is computed for each parameter in $\theta_*$, the entropy is computed (assuming $q$ is Gaussian) and fix

$$\theta_j^* = \operatorname*{argmax}_{\theta' \in \theta_*} \frac{1}{2}\log\left(2\pi Var(\theta')\right)$$

$\theta_j^*$ is then evaluated by simulating $M_T(\theta_j^*)$ to ascertain $\ell_{j+1}$ and $J_{j+1}$, which yields the updated dataset $D_{j+1}$ and the process iterates till a termination criterion such as a maximum number of iterations is achieved.

Thus, the active learning method accelerates the Bayesian optimization step, and guides the calibration system 101 where best to simulate the dynamical model $M_T(\theta)$ to get better estimates of the failure region boundaries.

Classical BO methods assume the presence of one global optimum, and smoothness of the $\theta$ to J map. Since J is typically assumed to be continuous, the data at the j-th iteration is leveraged to construct a surrogate GP model of the reward, given by

$$\hat{J}_j := GP\left(\mu(\theta; D_j), \sigma(\theta, \theta'; D_j)\right) \qquad (8)$$

where $\mu(\cdot)$ is the predictive mean function, and $\sigma(\cdot,)$ is the predictive variance function, and $D_j$ containing $\{\theta_{[0:j]}, J_{[0:j]}\}$ is the dataset collected thus far. Typically, the variance is expressed through the use of kernel functions.

At the j-th learning iteration, for a new query sample $\theta \in \Theta$, the GP model predicts the mean and variance of the reward to be $\mu(\theta) = k_j(\theta)^\top K_j^{-1} J_{0:j}$ and $\sigma(\theta) = \mathcal{K}(\theta, \theta) - k_j(\theta) K_j^{-1} k_j(\theta)^\top J_{0:j}$, where $k_j(\theta) = \begin{bmatrix} \mathcal{K}(\theta_0, \theta) & \mathcal{K}(\theta_1, \theta) & \dots \mathcal{K}(\theta_j, \theta) \end{bmatrix}$, and $K_j$ is defined in equation (4)

The accuracy of predicted mean and variance is strongly linked to the selection of the kernel and the best set of hyperparameters such as length scales and variance parameters of the kernels and estimated noise. These hyperparameters are obtained by maximizing the log marginal likelihood function (MLL)

$$-\frac{1}{2}\log|K_j| - \frac{1}{2}J(\theta)^\top K_j^{-1} J(\theta) - \frac{n_\theta}{2}\log 2\pi$$

In some embodiments, inducing variables as in the VGPC can be used to significantly improve scalability of the GP.

In Bayesian optimization, the mean and variance of a surrogate model $\hat{J}_j$ (also referred to as "surrogate GP model") in equation (8) to construct an acquisition function to inform the selection of a $\theta_j$ that increases the likelihood of minimizing the current best cost. To this end, the incumbent $\hat{J}_j^* := \min_{\theta \in \Theta} \mu(\theta; D_j)$ is computed and used to define an expected improvement (EI) acquisition function that has the form

$$EI(\theta, j) = \begin{cases} \sigma(\theta)\gamma(z) + (\hat{J}_j^* - \mu(\theta))\Gamma(z) & if \ \sigma(\theta) > 0, \\ 0 & if \ \sigma(\theta) > 0 \end{cases}$$

where $z = \dfrac{\hat{J}_j^* - \mu(\theta)}{\sigma(\theta)}$, and $\gamma(.)$, $\Gamma(.)$ are the probability distribution function (PDF) and the cumulative distribution function (CDF) of the zero-mean unit-variance normal distribution, respectively. Thus, the Bayesian optimization includes the acquisition function that exploits the probabilistic mapping provided by the probabilistic GP surrogate model to direct querying of consequent combination of the different parameters.

In the j-th iteration of learning, the data $D_j$ is used to construct the EI acquisition function using the surrogate $\hat{J}_j$. Subsequently, the optimizer candidate is computed

$$\theta_{j+1} = \underset{\theta \in \Theta}{\text{argmax}} \, EI(\theta, j) \qquad (9)$$

which serves as the parameter estimate $\theta$ in equation (1) in the next BO iteration. In some cases, other acquisition functions such as the lower confidence bound or entropy search can be used instead of EI.

Further, since the VGPC generates a probabilistic output associated with failure and success of simulation, the probabilistic output can be directly incorporated into the acquisition function. This yields the failure-robust EI (FREI) acquisition function:

$$FREI(\theta, j).(1 - PF(\theta, j)) \qquad (10)$$

where $PF(\theta,j)$ is the likelihood of failure calculated by training the VGPC using data up to the j-th iteration, and then evaluating the likelihood of the VGPC at $\theta$. If the VGPC algorithm does not find any $\theta$ such that $P(\theta) > 0$, then the FREI acquisition function (10) is zero for every $\theta \in \Theta$ and future candidates are selected randomly until at least one $\theta$ is found which allows for a successful simulation.

To that end, both successful simulations and failure simulations are observed, and the VGPC is trained on a non-trivial classification problem. In such a case, the higher the value of $P(\theta, j)$, the higher the probability that a particular candidate is selected, so long as its expected improvement is high as well. The multiplicative nature of the components in (10) seeks to ensure that neither one component can outweigh the other, and candidates will be selected only if they are both a candidate for optimization and feasibility (i.e., is expected to yield a successful simulation). Along the same lines as (9), the FR-BO selects the next optimizer candidate as follows:

$$\theta_{j+1} = \underset{\theta \in \Theta}{\text{argmax}} \, FREI(\theta, j) \qquad (11)$$

Thus, in the FREI, likelihood is estimated off the binary labels $\ell$, in contrast with constrained BO, where probabilities are estimated based on continuous slack variables obtained from the constraints. FREI uses Gaussian process (GP) proxies for constraint modeling for a classifier that classifies combinations of parameters into at least one of: parameters causing simulation failure or parameters causing simulation success.

Some embodiments are based on the realization that retraining the VGPC is expensive after the collection of each new data sample. However, as long as the VGPC has been trained initially with some data, VGPC can be retrained infrequently. In such a case, frequency of retraining the VGPC is problem dependent. In some embodiments, the VGPC is retrained when the FR-BO operation is stuck at a local optimum for a pre-decided number of iterations.

FIG. 1C illustrates a graphical representation of mean and confidence range output from a probabilistic parameter-to-cost regressor module 107c of the calibration system, according to some embodiments of the present disclosure. In particular, FIG. 1C illustrates a graph of a parameter (x) on an X-axis and a dependent function (f(x)) on a Y-axis. The graph indicates changes in the dependent function f(x) for different values the parameter X within the admissible range of the parameter X (in this case [-1 to 3]). For the ease of explanation, the graph in FIG. 1C includes only one parameter and only one dependent function. However, in real-life models of the industrial system 103, the graph will comprise a plurality of parameters and a plurality of dependent function.

Referring to FIG. 1C, dots (such as dots 21) within the graph indicates samples/observations, a curve 123 indicates the mean, and shaded area 125 indicates the confidence range. Thus, the graph provides information about estimated value of the dependent function f(x) for an estimated value of the parameter X. The calibration system 101 uses the graph to determine one or more failure regions within the admissible range of the parameter X that may result into failure of the simulation. From the graph of FIG. 1C, it can be determined that there are high chances of the failure of the simulation by selecting values of X in the range 1.25 onwards. This region within the admissible space (or range) of the X is referred to as the failure region because it is high likely that by selecting values of X within the failure region (i.e., from 1.25 to 2) the simulation of the model may fail.

In some embodiments, based on a graph (like the graph in FIG. 1C) corresponding to a model with a plurality of parameters, the calibration system 101 may determine the failure regions as a combination of values of the plurality of parameters that increases the likelihood of failure of the operation of the industrial system 103. The calibration system 101 uses the FR-BO module 107 to learn failure regions of different parameters used in the model of the industrial system 103 and thus, accurately estimates values of the different parameters that lead to successful simulation. In this way, the calibration system 101 saves excessive time and other resources on the simulation.

FIG. 1D illustrates a graphical representation of an acquisition function executed by the calibration system 101, according to some embodiments of the present disclosure. In particular, in FIG. 1D, there is shown a graph including a curve 127 of the acquisition function for selecting the combination of the different parameters which are to be queried next. The acquisition function uses the probabilistic mapping provided by the probabilistic parameter-to-cost module 107c to select the combination of the different parameters to be queried next. In some embodiments, the acquisition function is maximized by the calibration system 101 to select a combination of the different parameters having the largest likelihood of being a global minimum 129 at the probabilistic mapping, for querying. Therefore, the acquisition function is used as a guidance to select the combination of different parameters to query next.

FIG. 2 illustrates a block diagram of the calibration system 200 for calibrating the industrial system 103, according some embodiments of the present disclosure. The calibration system 200 can have a number of interfaces connecting the calibration system 200 with other systems and devices. For example, a network interface controller (NIC) 201 is adapted to connect the calibration system 200, through a bus 203, to a network 205. Through the network 205, either wirelessly or through wires, the calibration system 200 may receive the data 207 indicative of measurements of the operation of the industrial system including values of the control inputs to the actuators of the industrial system and values of a state of the industrial system caused by the operation of the industrial system according to the values of the control inputs.

For example, the industrial system 103 corresponds to an HVAC system. The calibration system 200 may wirelessly receive, via the network 205, values of control inputs to actuators of the HVAC system and values of thermal state at locations of an environment caused by the operation of the HVAC system according to the values of the control inputs. In some cases, the data 207 indicative of the measurements of the operation of the HVAC system and the values of the thermal state at locations of the environment may be received via an input interface 209.

The calibration system 200 includes a processor 211 configured to execute stored instructions, as well as a memory 213 that stores instructions that are executable by the processor 211. The processor 211 can be a single core processor, a multi-core processor, a computing cluster, or any number of other configurations. The memory 213 can include random access memory (RAM), read only memory (ROM), flash memory, or any other suitable memory systems. The processor 211 is connected through the bus 203 to one or more input and output devices. Further, the calibration system 200 includes a storage device 215 adapted to store different modules storing executable instructions for the processor 211. The storage device 215 can be implemented using a hard drive, an optical drive, a thumb drive, an array of drives, or any combinations thereof.

The storage device 215 is configured to store the FR-BO module 107, where the FR-BO module 107 is configured to determine optimal values of combinations of different parameters to avoid the simulation failure of simulation model (not shown in FIG. 2) corresponding to the industrial system 103. To that end, the FR-BO module 107 is trained based on the training data including various combinations of different parameters resulting in simulation failure or simulation success.

The FR-BO module 107 comprises the parameter-to-cost regressor module 107c to obtain the probabilistic parameter-to-cost mapping. The parameter-to-cost regressor module 107c is trained iteratively, until the termination condition is met, to map between various combinations of different values of the parameters of the model and corresponding calibration errors. The parameter-to-cost regressor module 107c is further configured to determine the first two order moments (i.e., the mean $\mu$ and the standard deviation $\sigma$) of the calibration errors.

The FR-BO module 107 is further configured to estimate likelihoods of simulation success and failure on admissible range (or space) of different values of the parameters by learning the set failure regions. To that end, the FR-BO module 107 uses the failure classifier module 107b, where the failure classifier module 107b is trained to define a likelihood of failure of the operation of the industrial system 103 for the admissible range of values of parameters of the model using the training data. The training data includes the selected combinations of the values of the parameters labeled with the estimated success or failure of the simulation.

The FR-BO module 107 further comprises the acquisition function module 107d that uses an acquisition function to select parameters such that the failure region corresponding to the selected parameters is avoided. To that end, the acquisition function module 107d obtains the first two order moments of the calibration errors from the parameter-to-cost regressor module 107c and executes the acquisition function for the first two order moments to identify a combination of parameters having the maximum likelihood of minimizing the calibration error according to the probabilistic parameter-to-cost mapping. In some embodiments, the acquisition function of the first two order moments of the calibration error is used to select the combination of the different parameters to query the next combination of the different parameters.

Further, the FR-BO module 107 comprises the failure-robust acquisition function module 107a that is configured to adjust values of the parameters in the identified combination of parameters based on the output of the acquisition function module 107d and output of the failure classifier module 107b. Thus, the failure-robust acquisition function module 107a incorporates probabilistic output (obtained from the failure classifier module 107b) into the acquisition function to yield failure-robust EI (FREI) acquisition function. Further, the updated values of the combination of parameters are used for training the FR-BO module 107 in next iteration. The updated values of the combination of the parameters are used for simulating the simulation model in the next iteration.

Additionally, the calibration system 200 may include an output interface 217. In some embodiments, the calibration system 200 is further configured to submit, via the output interface 217, the optimal combination of the different parameters of model of the industrial system 103 to a controller 219 of the industrial system 103. The controller 219 is configured to generate control inputs to the actuators of the industrial system 103 based on the optimal combination of the different parameters of the model.

In some embodiments, the calibration system 101 is used to estimate optimal values for different parameters of the Robertson system, where the Robertson system is a stiff nonlinear system of chemical kinetics. The Robertson system is modeled as follows:

$$\dot{x}_1 = -\theta_1 x_1 + \theta_2 x_2 x_3 \qquad\qquad y = x$$

$$\dot{x}_2 = \theta_1 x_2 - \theta_2 x_2 x_3 - \theta_2 x_2^2 \qquad\qquad 0 = x_1 + x_3 + x_3 - 1$$

$$\dot{x}_3 = -\theta_3 x_2^2,$$

where $x_1$, $x_2$, and $x_3$ are concentrations of chemical species, and the true parameters of the system are $\theta_1 = 4 \times 10^{-2}$, $\theta_2 = 10^{-4}$, and $\theta_3 = 3 \times 10^7$.

The system of equations is assumed unknown during parameter estimation using FR-BO approach. Ground truth data is collected by simulating the Robertson system forward for T = [0, 20] s, after which T is partitioned into 100 equidistant samples in order to obtain the measured outputs $y^*_{0:T}$ collected from the Robertson system.

Further, the admissible parameter space of parameters associated with the Robertson system is defined in logarithmic space and is given by $\log_{10}\Theta = \{[-3, -1] \times [2, 12] \times [5, 15]\}z$. Thus, $\theta_1$ can lie in the interval $[10^{-3}, 10^{-1}]$, $\theta_2$ can lie interval $[10^{-2}, 10^{12}]$, and similarly, $\theta_3$ can lie interval $[10^5, 10^{15}]$. For each $\theta$ sampled on $\Theta$, the Robertson system is simulated over T. In an example embodiment, the Robertson system may be simulated using the Radau IIA solver, which is well-suited to the numerical integration of stiff systems.

Further, for each $\theta$, $M_T(\theta)$ is computed and a parameter estimation cost function

$$J(y^*_{0:T}, M_T(\theta)) = \log\sum_{t=0}^{T}(y^*_t - y_t)^{\top} W(y^*_t - y_t)$$, where $y_t$ is the output vector obtained from $M_T(\theta)$ at the t-th time instant is also estimated. The matrix W is a scaling matrix to ensure that the three output components are of similar magnitudes.

To that end, the scaling matrix W is set to W = diag[1, 5×10^4, 1]. Further, 300 data points are collected using active learning for the VGPC and then run 700 BO iterations, with the VGPC retrained every 100 iterations during BO.

FIG. 3 illustrates a first table (Table I) including hyperparameters of a Robertson system for execution of a failure-robust Bayesian optimization (FR-BO) method, according to some embodiments of the present disclosure. In particular, the first table (Table I) includes hyperparameters used for the VGPC and the GPR learners needed for FR-BO.

After applying FR-BO, the set of parameters that produces the lowest cost is given by $\tilde{\theta}_1 = 3.717 \times 10^{-2}$, $\tilde{\theta}_2 = 0.887 \times 10^4$, and $\tilde{\theta}_3 = 3.03 \times 10^7$, which is satisfactorily close to the true parameters. The effectiveness of the estimated parameters is validated on a time span of $[10^{-5}, 10^5]$ to showcase multi-scale dynamics. The similarity of the model outputs and the true outputs is demonstrated in FIG. 4A. Further, the mean squared error between the two trajectories is $9.910 \times 10^{-5}$.

FIG. 4A illustrates graphical representation of comparison of true outputs and estimated outputs of the Robertson system, according to some embodiments of the present disclosure. The comparison is computed in a testing scenario for the time span of $[10^{-5}, 10^5]$. From FIG. 4A, it is clear that the estimated values of the parameters are very close to the real values of the parameters.

Further, two slices of the failure region learned by the VGPC are demonstrated with reference to FIG. 4B.

FIG. 4B illustrates slices of a parameter space with probabilities of failure estimated by a failure classifier module 107b of the calibration system 101, according to some embodiments of the present disclosure. The slice on the left in the FIG.4B is obtained by fixing $\theta_2$ at its estimated value and allowing $\theta_1$ and $\theta_3$ to vary over the subset of O. Similarly, the slice of the right in the FIG. 4B is obtained by fixing $\theta_1$ and allowing the other two parameters $\theta_2$ and $\theta_3$ to vary. Both slices clearly indicate that the VGPC has identified a region where the model simulation is likely to exhibit failure. Further, it is also evident that such a region can have significant curvature. Therefore, even for a low-dimensional dynamical systems, it is advantageous to use advanced nonlinear classifiers like VGPC rather than linear classifiers.

In another example embodiment, the calibration system 101 is used to estimate parameters , for dynamical model in a building digital twin. Simulation model of building energy behavior for digital twin application is designed to predict multiscale nonlinear dynamics that result from the temporal interactions between the many different building subsystems.

FIG. 5A illustrates a scenario including thermal dynamics of a building 500 and a Heating, ventilation, and air conditioning (HVAC) 501 system to be calibrated by the calibration system 101, according to an example embodiment of the present disclosure. The HVAC system 501 is installed in the building (also referred to as "building system") 500 to condition an environment of the building. A model of a vapor compression cycle of the HVAC system 501 comprising a compressor, a condensing heat exchanger, an electronic expansion valve, and an evaporating heat exchanger, is constructed. The vapor compression cycle behavior is dominated by the heat exchangers over time scales of interest. Therefore, the model of a vapor compression cycle uses dynamic models of the heat exchangers and algebraic (static) models of the compressor and the electronic expansion valve. For the ease of describing, a lumped parameter method was used to characterize dynamics of a refrigerant flow in the heat exchangers. In an embodiment, a Helmholtz equation-of-state based model may be used to describe the refrigerant properties, while an ideal gas mixture may be used for the moist air model.

A simple isenthalpic model of the electronic expansion valve and mass flow rate is regularized in a neighborhood of zero flow to prevent a derivative of the mass flow rate from tending toward infinity. A flow coefficient is determined via calibration against experimental data. An operation of the compressor may be described by relating a volumetric efficiency and an isentropic efficiency to a suction pressure, a discharge pressure, and a compressor frequency.

In an example embodiment, building models of the building 500 are constructed from an open-source Modelica Buildings library. A room model is based on a physics-based behavior of fundamental materials and commonly used components, while a zone air model is a mixed air single-node model with one bulk air temperature that interacts with all of the radiative surfaces and thermal loads in the room.

According to an embodiment, the building models may be parameterized by a thickness of a roof 503, a thickness of outside wall 505, and a thickness of floor 507. The thickness of the roof depends on a thickness of concrete layer 509, a thickness of insulation layer 511, and a size of plenum 513. The thickness of floor 507 depends on a thickness of concrete slab 515 and a thickness of the carpet tile 517.

For instance, the building model consists of a one-story residence with nominal 2009 IECC-based construction, where the one-story residence has a floor area, e.g., 112.24 m and is 2.6 m tall, and is oriented along with cardinal directions with a peak occupancy of 3 people. Each outside wall also has a window 519 of size (e.g., 1.52 m $\times$ 2.72 m) that admits solar heat gains into spaces of the building 500. A 10 cm thick concrete slab and 2 m of soil below the building 500 is also included to characterize interactions with thermal boundary conditions under the building 500, which was set to a constant 21°C. Additionally, a peaked attic is also included with a maximum height of 1.5 m, so that the building model includes two thermal zones.

Further, the building model is connected to the vapor compression cycle model, and a proportional integral (PI) controller 521 is implemented on a heat pump which used the compressor frequency to regulate a room temperature and the expansion valve position to regulate an evaporator superheat temperature. The PI controller 521 also implemented anti-windup to maintain stability while enforcing minimum and maximum actuator limits. The resulting joint building envelope/HVAC model (i.e., the model of thermal dynamics) is simulated using Atlanta-Hartsfield TMY3 file, and included convective and radiative heat loads of 2 W/m$^2$ and a latent load of 0.6 W/m$^2$ between hours of 8 AM and 6 PM, with weather-driven disturbances outside of these hours. Further, such a model is exported from Modelica using a Functional Mockup Interface, and resulting functional mockup unit (FMU) is imported into Python using the FMPy package to enable seamless integration of advanced machine learning modules.

Inputs and outputs of the model of thermal dynamics may be chosen to be similar to those which may be observed in a realistic experimental setting. Inputs of the heat pump include a room temperature set-point, an evaporator superheat set-point, and indoor and outdoor fan speeds. Inputs for the building model include convective, radiative, and latent heat loads as well as weather variables provided in TMY3 standard. Such heat loads may be estimated to reasonable accuracy via occupancy detection, load surveys, or other similar methods.

Further, ground-truth data is collected for calibration by simulating the models for a predetermined amount of time. In an example embodiment, the ground truth data is collected by simulating the Modelica model for a period of time (e.g., T=14 days) with 17 parameters of the model set to their true values. The search space of the parameters is $\pm15\%$ of the true parameters with $\pm5\%$ random translation of the upper and lower bounds for each parameter. The eight measured output sequences $y^*_{0:T}$ of the model are collected at 5 minutes intervals, and the FR-BO components have the same hyperparameters as in the Table I (FIG. 3), with two differences: the training iterations are kept at 2000 for the GP, and the kernels are Matern-5/2 for the VGPC.

The GP is initialized by choosing 100 randomly selected parameter samples from within the bounds $\Theta$ associated with each parameter. With each of the initial parameters' samples, the model is simulated for the same time interval as the ground truth and obtain the estimated output sequence $y^*_{0:T}$. Subsequently, the calibration-cost function from equation (3) is evaluated for each of the initial samples with the simulated and measured outputs. The initial collection of parameters and calibration-cost function values is used to construct an initial training set of the GP. In an embodiment, Matern 3/2 kernels with dimension-wise separate length-scales may be used, as the admissible parameter space is not normalized.

Further, the parameters chosen to be representative of the HVAC system 501 and the building 500 are provided in Table II illustrated in FIG. 5B.

FIG 5B illustrates a second table (Table II) including comparison between best estimates 523 of parameters 525 after predetermined number of iterations during calibration and true values 527 of parameters 525 of the building and the HVAC system, according to an example embodiment of the present disclosure. It can be observed that values of the parameters 525 estimated using FR-BO approach are very close to the true values 527 of the parameters 525.

Further, a comparison of the measured and estimated simulation outputs of the building 500 and HVAC system 501 is shown in FIG. 5C-5D.

FIG. 5C illustrates estimated outputs and true outputs associated with the building 500, according to an example embodiment of the present disclosure. The estimated outputs are provided by the model of the building system 500 calibrated using the FR-BO approach (using the calibration system 101). In the plots of FIG. 5C, the circles are true data points and the continuous lines are the estimated outputs from model simulation. It is clear from the FIG. 5C that the output error for the building system 500 is small, and this is further evident from the second Table II (FIG. 5B), where most parameters have been estimated with high accuracy.

FIG. 5D illustrates estimated outputs and true outputs associated with the HVAC system 501, according to an example embodiment of the present disclosure. The estimated outputs are provided by the model of the HVAC system 501 calibrated using the FR-BO approach (used by the proposed calibration system 101). In the plots of FIG. 5D, the circles are true data points and the continuous lines are the estimated outputs from model simulation. It can be observed from the FIG. 5D that the output error for the HVAC system 501 is small, and this is further evident from the second Table II (FIG. 5B), where most parameters have been estimated with high accuracy.

Further, effectiveness of the proposed calibration system 101 in reducing the amount of time wasted on failed simulations during optimization of an integrated building system (i.e., the building system 500 and the HVAC system 501) is also evaluated.

FIG. 6 illustrates regret and number of simulation failure of an integrated building system including the HVAC system 501 and the building 500, according to an example embodiment of the present disclosure. For the evaluation purpose, the VGPC is allowed to first collect data via active learning for 450 iterations before it begins the optimization process. In the left subplot 601 of FIG. 6, it can be observed that due to the incorporation of the FREI function the number of simulation failures is reduced. This improves the convergence of the Bayesian optimization step, so that the FR-BO converges to its best solution within approximately 700 iterations, which results in a lesser cost.

In the right subplot 603 of FIG. 6, it can be observed that the total time that is used for Bayesian optimization is higher for FR-BO (15 hr vs. 9 hr) and the total time wasted simulating failures is significantly less (15 hr vs. 23 hr), which equates to saving 8 hours of wall time.

FIG. 7 illustrates steps of a calibration method 700 for calibrating a model of the industrial system 103, according to an example embodiment.

At step 701, an operation of the industrial system 103 is simulated multiple times. In each simulation cycle, execution of a model of the industrial system 103 includes different combinations of values of parameters selected within an admissible range of values of the parameters to estimate success or failure of the simulation. The industrial system 103 may correspond to any systems that can be modeled such as a building system, an HVAC system, and the like.

At step 703, for defining a likelihood of failure of the operation of the industrial system 103 for the admissible range of values of parameters of the model, the failure classifier 107b is trained. Training data used for training the failure classifier 107b includes the selected combinations of the values of the parameters labeled with the estimated success or failure of the simulation.

At step 705, for a probabilistic parameter-to-cost mapping between various combinations of different values of the parameters of the model of the industrial system 103 and their corresponding calibration errors, the parameter-to-cost regressor 107c is trained iteratively.

To train the parameter-to-cost regressor 107c iteratively, at step 705a, an acquisition function of a first two order moments of the calibration errors identifying a combination of parameters having the maximum likelihood of minimizing the calibration errors is executed according to the probabilistic parameter-to-cost mapping.

At step 705b, the identified combination of parameters is updated with a failure-robust acquisition function module 107a by adjusting the identified parameters according to the failure classifier module 107b to reduce the likelihood of the failure of the operation of the industrial system 103 with the model having the updated parameters.

At step 705c, the operation of the industrial system 103 controlled by the control inputs in the operational data is simulated with the model having the updated parameters to produce simulated states of the industrial system 103. Further, the probabilistic parameter-to-cost mapping is updated based on the updated parameters and the calibration errors between the simulated states of the industrial system 103 and corresponding states of the industrial system 103 in the operational data.

At step 707, the model of the industrial system 103 is calibrated with an optimal combination of the parameters having the largest likelihood of minimizing the calibration errors at the probabilistic parameter-to-cost mapping according to the acquisition function.

Some embodiments are based on the realization that the simulation model 111 can be refined based on identification of the failure region. To that end, the calibration system 101 is configured to learn the failure region. The failure region is a subregion of the admissible parameter space where the simulation model 111 will fail to simulate for one or more combinations of parameters. Thus, the failure region is deterministic. To identify the failure regions, the calibration system 101 uses the failure classifier module 107b that is trained to estimate the failure region in the admissible parameter space for different combinations of the parameters. Based on the training, the failure classifier module 107b estimates the failure regions in the admissible parameter space with some likelihood. Thus, the output of the failure classifier module 107b is probabilistic.

Based on the failure regions estimated by the failure classifier module 107b, the calibration system 101 is further configured to refine the admissible parameter space iteratively, until the estimated failure region satisfies predetermined conditions. The predetermined conditions may include size of the failure region. More details regarding the simulation model refinement (or admissible parameter space refinement) are provided below with reference to FIG. 8.

FIG. 8 illustrates steps of a method 800 for refining admissible parameter space of the simulation model 111 based on the failure region, according to an example embodiment. FIG. 8 is described below in conjunction with FIG. 7. In an example embodiment, the method 800 may be executed during the training of the failure classifier module 107b at step 703 of the calibration method 700. In another embodiment, the method 800 may be executed using a pre-trained failure classifier module 107b.

At step 801, the simulation model 111 (also referred to as "model") corresponding to the industrial system 103 is obtained by the calibration system 101. In an example embodiment, the simulation model 111 may be predefined in the calibration system 101.

At step 803, failure of the simulation model 111 is defined. For example, the failure may be defined as unsuccessful simulation, forward in time, of the model 111 to a desired final time. In another embodiment, the failures may be defined as any simulation of the model 111 that takes more than a predetermined time interval for simulating the model 111. For example, if the model 111 is configured to complete the simulation within the predetermined time interval (for example 5 seconds), the failure is defined as any simulation that takes more than the predetermined time interval i.e., 5 seconds.

At step 805, the failure region is estimated using the FR-BO module 107, where the failure region is determined based on the definition of the failure defined at step 803. To that end, the FR-BO module 107 uses the failure classifier module 107b, where the failure classifier module 107b is trained to estimate the failure region based on values of the different combination of the parameters.

At step 807, the model 111 is refined i.e., the admissible parameter space of parameters in the different combinations of the parameters is refined based on the failure region estimated at step 805.

At step 809, it is determined whether the failure region of the refined model satisfies predetermined conditions for the failure region. The predetermined condition for the failure region may define size of the failure region within the admissible parameter space corresponding to the different combinations of the parameters. When it is determined that the failure region of the refined model does not satisfy the predetermined condition, for example, the failure region is not equal to or less than the predefined size of the failure region, the method 800 loops back, iteratively, to the step 807, where the refined model is refined again and the failure region is re-estimated.

On the other hand, when it is determined that the failure region of the refined model satisfies the predetermined condition, the method 800 proceeds to step 811, where the finalized refined model is used for calibrating the parameters of the model 111.

**Embodiments:**

The above description provides exemplary embodiments only, and is not intended to limit the scope, applicability, or configuration of the disclosure. Rather, the above description of the exemplary embodiments will provide those skilled in the art with an enabling description for implementing one or more exemplary embodiments. Contemplated are various changes that may be made in the function and arrangement of elements without extending the scope of the subject matter disclosed as set forth in the appended claims.

Specific details are given in the above description to provide a thorough understanding of the embodiments. However, understood by one of ordinary skill in the art can be that the embodiments may be practiced without these specific details. For example, systems, processes, and other elements in the subject matter disclosed may be shown as components in block diagram form in order not to obscure the embodiments in unnecessary detail. In other instances, well-known processes, structures, and techniques may be shown without unnecessary detail in order to avoid obscuring the embodiments. Further, like reference numbers and designations in the various drawings indicate like elements.

Also, individual embodiments may be described as a process which is depicted as a flowchart, a flow diagram, a data flow diagram, a structure diagram, or a block diagram. Although a flowchart may describe the operations as a sequential process, many of the operations can be performed in parallel or concurrently. In addition, within the scope of the claimed invention, the order of the operations may be re-arranged. A process may be terminated when its operations are completed but may have additional steps not discussed or included in a figure. Furthermore, not all operations in any particularly described process may occur in all embodiments. A process may correspond to a method, a function, a procedure, a subroutine, a subprogram, etc. When a process corresponds to a function, the function's termination can correspond to a return of the function to the calling function or the main function.

Furthermore, embodiments of the subject matter disclosed may be implemented, within the scope of the claimed invention, either manually or automatically. Manual or automatic implementations may be executed, through the use of machines, hardware, software, firmware, middleware, microcode, hardware description languages, or any combination thereof. When implemented in software, firmware, middleware or microcode, the program code or code segments to perform the necessary tasks may be stored in a machine readable medium. A processor(s) may perform the necessary tasks.

Various methods or processes outlined herein may be coded as software that is executable on one or more processors that employ any one of a variety of operating systems or platforms. Additionally, such software may be written using any of a number of suitable programming languages and/or programming or scripting tools, and also may be compiled as executable machine language code or intermediate code that is executed on a framework or virtual machine. Typically, the functionality of the program modules may be combined or distributed as desired in various embodiments.

Embodiments of the present disclosure may be embodied as a method, of which an example has been provided. within the scope of the appended claims, acts performed as part of the method may be ordered in any suitable way. Accordingly, embodiments may be constructed in which acts are performed in an order different than illustrated, which may include performing some acts concurrently, even though shown as sequential acts in illustrative embodiments. Although the present disclosure has been described with reference to certain preferred embodiments, it is to be understood that various other adaptations and modifications can be made within the scope of the present disclosure. Therefore, it is the aspect of the append claims to cover all such variations and modifications as come within the scope of the present disclosure.

**Claims**

1. A calibration system (200) for calibrating a model of dynamics of an industrial system (103), the calibration system (200) comprising a transceiver (101a) configured to exchange data over a network (105), the data comprising operational data indicative of measurements of an operation of the industrial system (103) and a sequence of control inputs to actuators of the industrial system (103),
the model configured to explain changes of a state of the industrial system (103) in response to controlling the industrial system (103) according to the sequence of control inputs to fit the operational data indicative of measurements of an operation of the industrial system (103) including values of the control inputs and corresponding values of the state of the industrial system (103), the calibration system (200) comprising: at least one processor (211); and a memory (213) having instructions stored thereon that, when executed by the at least one processor (211), cause the calibration system (200) to:

simulate an operation of the industrial system (103) multiple times, each simulation cycle includes execution of the model of the industrial system (103) having different combinations of values of parameters selected within an admissible range of values of the parameters to estimate success or failure of the simulation based on at least one condition related to the expected termination time or the underlying dynamics the simulation;
train a failure classifier (107b) defining a likelihood of failure of the operation of the industrial system (103) for the admissible range of values of parameters of the model using training data including the selected combinations of the values of the parameters labeled with the estimated success or failure of the simulation;

train a parameter-to-cost regressor (107c) for a probabilistic parameter-to-cost mapping between various combinations of different values of the parameters of the model of the industrial system (103) and their corresponding calibration errors, wherein the calibration error is calculated between simulated states of the industrial system (103) for the combination of different values of parameters and corresponding states of the industrial system (103) in the operational data, and wherein the parameter-to-cost regressor (107c) is trained iteratively until a termination condition is met, and wherein to perform an iteration the at least one processor (211) is configured to:

execute an acquisition function (107d) of a first two order moments of the calibration errors configured to identify a combination of parameters having maximum likelihood of minimizing the calibration errors according to the probabilistic parameter-to-cost mapping;

update the identified combination of parameters with a failure-robust acquisition function (107a) adjusting the identified parameters according to the failure classifier (107b) to reduce the likelihood of the failure of the operation of the industrial system (103) with the model having the updated parameters;

simulate the operation of the industrial system (103) controlled by the control inputs in the operational data with the model having the updated parameters to produce simulated states of the industrial system (103); and

update the probabilistic parameter-to-cost mapping based on the updated parameters and calibration errors between the simulated states of the industrial system (103) and corresponding states of the industrial system (103) in the operational data; and

calibrate, when the termination condition is met, the model of the industrial system (103) with an optimal combination of the parameters having the largest likelihood of minimizing the calibration errors at the probabilistic parameter-to-cost mapping according to the acquisition function (107d).

2. The calibration system (200) of claim 1, wherein the at least one processor (211) is further configured to:

estimate a failure region within the admissible range of values of parameters in the selected combination of parameters, wherein the failure region comprises at least one combination of values of the parameters that causes failure of the operation of the industrial system (103); and

provide probabilities of simulation failure over the entire admissible range of values of parameters in the selected combination of parameters based on the estimated failure region.

3. The calibration system (200) of claim 1, wherein the training data further includes values of a cost function, wherein the values of the cost function correspond to at least one of: real-valued scalars when the simulation of the model is successful or null values when the simulation of the model is unsuccessful.

4. The calibration system (200) of claim 2, wherein, to obtain the failure region, the at least one processor (211) is further configured to:

sample within the admissible range of parameters to obtain the training data for learning the failure region, wherein the failure region is learnt using a scalable variational Gaussian process classifier (VGPC).

5. The calibration system (200) of claim 4, wherein the parameter-to-cost regressor is trained iteratively using a Bayesian optimization, and wherein the Bayesian optimization includes a cost/reward function model using a Gaussian process (GP) for computing a probabilistic GP surrogate model for providing probabilistic parameter-to-cost mapping.

6. The calibration system (200) of claim 4, wherein the at least one processor (211) is further configured to:

obtain predetermined conditions for the failure region; and

estimate the failure region iteratively until the estimated failure region satisfies the predetermined condition for the failure region.

7. The calibration system (200) of claim 5, wherein a prior function of the VGPC is initialized based on the training data and a user-specified kernel function.

8. The calibration system (200) of claim 5, wherein the Bayesian optimization includes the acquisition function that is configured to exploit the probabilistic mapping provided by the probabilistic GP surrogate model to direct querying of consequent combination of the different parameters.

9. The calibration system (200) of claim 5, wherein the Bayesian optimization uses a mean and a variance of the surrogate GP model to construct the acquisition function to select the combination of parameters having the maximum likelihood of minimizing the calibration error according to the probabilistic parameter-to-cost mapping.

10. The calibration system (200) of claim 7, wherein the acquisition function includes an expected improvement (EI) acquisition function or wherein the user-specified kernel function comprises at least one of: a squared exponential kernel or a Matern Kernel.

11. The calibration system (200) of claim 8, wherein the at least one processor (211) is further configured to:
    obtain, using the scalable VPGC, probabilities of simulation failure over the entire admissible range of values of parameters in the selected combination of parameters,
    wherein the obtained probabilities of simulation failure are used by the acquisition function to form a failure-robust EI (FREI) acquisition function.

12. A calibration method for calibrating a model of dynamics of an industrial system (103) that explains changes of a state of the industrial system (103) in response to controlling the industrial system (103) according to a sequence of control inputs to actuators of the industrial system (103), to fit operational data indicative of measurements of an operation of the industrial system (103) including values of the control inputs and corresponding values of the state of the industrial system (103), the calibration method comprising:

    simulating an operation of the industrial system (103) multiple times, each simulation cycle includes execution of the model of the industrial system (103) having different combinations of values of parameters selected within an admissible range of values of the parameters to estimate success or failure of the simulation based on at least one condition related to the expected termination time or the underlying dynamics of the simulation;
    training a failure classifier (107b) defining a likelihood of failure of the operation of the industrial system (103) for the admissible range of values of parameters of the model using training data including the selected combinations of the values of the parameters labeled with the estimated success or failure of the simulation;
    training a parameter-to-cost regressor (107c) for a probabilistic parameter-to-cost mapping between various combinations of different values of the parameters of the model of the industrial system (103) and their corresponding calibration errors, wherein the calibration error is calculated between simulated states of the industrial system (103) for the combination of different values of parameters and corresponding states of the industrial system (103) in the operational data, and wherein the parameter-to-cost regressor (107c) is trained iteratively until a termination condition is met, and wherein to perform an iteration the calibration method comprises:

        executing an acquisition function (107d) of a first two order moments of the calibration errors identifying a combination of parameters having the maximum likelihood of minimizing the calibration errors according to the probabilistic parameter-to-cost mapping;
        updating the identified combination of parameters with a failure-robust acquisition function (107a) adjusting the identified parameters according to the failure classifier (107b) to reduce the likelihood of the failure of the operation of the industrial system (103) with the model having the updated parameters;
        simulating the operation of the industrial system (103) controlled by the control inputs in the operational data with the model having the updated parameters to produce simulated states of the industrial system (103); and
        updating the probabilistic parameter-to-cost mapping based on the updated parameters and calibration errors between the simulated states of the industrial system (103) and corresponding states of the industrial system (103) in the operational data; and calibrating, when the termination condition is met, the model of the industrial system (103) with an optimal combination of the parameters having the largest likelihood of minimizing the calibration errors at the probabilistic parameter-to-cost mapping according to the acquisition function (107d).

13. The calibration method of claim 12, further comprising:

    estimating a failure region within the admissible range of values of parameters in the selected combination of parameters, wherein the failure region comprises at least one combination of values of the parameters that causes failure of the operation of the industrial system (103); and
    providing probabilities of simulation failure over the entire admissible range of values of parameters in the selected combination of parameters based on the estimated failure region.

**14.** The calibration method of claim 13, wherein, for obtaining the failure regions the calibration, the calibration method further comprising:
sampling within the admissible range of parameters to obtain the training data for learning the failure region, and wherein the failure region is learnt using a scalable variational Gaussian process classifier (VGPC).

**15.** The calibration method of claim 13,

wherein the probabilistic parameter-to-cost regressor is trained iteratively using a Bayesian optimization, and wherein the Bayesian optimization includes a cost/reward function model using a Gaussian process (GP) for computing a probabilistic GP surrogate model for providing probabilistic parameter-to-cost mapping, or wherein the method further comprises:

obtaining predetermined conditions for the failure region; and
estimating the failure region iteratively until the estimated failure region satisfies the predetermined condition for the failure region.

**Patentansprüche**

**1.** Kalibrierungssystem (200) zum Kalibrieren eines Modells der Dynamik eines industriellen Systems (103), wobei das Kalibrierungssystem (200) einen Transceiver (101a) umfasst, der eingerichtet ist, Daten über ein Netzwerk (105) auszutauschen, wobei die Daten Betriebsdaten, welche Messungen eines Betriebs des industriellen Systems (103) anzeigen, und eine Sequenz von Steuereingaben zu Aktuatoren des industriellen Systems (103) umfassen, wobei das Modell eingerichtet ist, Änderungen eines Zustands des industriellen Systems (103) als Reaktion auf die Steuerung des industriellen Systems (103) gemäß der Sequenz von Steuereingaben zu erklären, um die Betriebsdaten, die Messungen eines Betriebs des industriellen Systems (103) anzeigen, einschließlich Werten der Steuereingaben und entsprechender Werte des Zustands des industriellen Systems (103), anzupassen, wobei das Kalibrierungssystem (200) umfasst: mindestens einen Prozessor (211); und einen Speicher (213) mit darauf gespeicherten Befehlen, die, wenn sie von dem mindestens einen Prozessor (211) ausgeführt werden, das Kalibrierungssystem (200) dazu veranlassen:

einen Betrieb des industriellen Systems (103) mehrfach zu simulieren, wobei jeder Simulationszyklus die Ausführung des Modells des industriellen Systems (103) mit verschiedenen Kombinationen von Werten von Parametern umfasst, die innerhalb eines zulässigen Wertebereichs der Parameter ausgewählt werden, um den Erfolg oder Misserfolg der Simulation auf der Grundlage von mindestens einer Bedingung zu schätzen, die sich auf die erwartete Beendigungszeit oder die zugrunde liegende Dynamik der Simulation bezieht;
einen Misserfolgklassifikator (107b) zu trainieren, der eine Wahrscheinlichkeit eines Misserfolgs des Betriebs des industriellen Systems (103) für den zulässigen Wertebereich von Parametern des Modells unter Verwendung von Trainingsdaten, die die ausgewählten Kombinationen der Werte der Parameter enthalten, die mit dem geschätzten Erfolg oder Misserfolg der Simulation gekennzeichnet sind, definiert;
einen Parameter-zu-Kosten-Regressor (107c) für eine probabilistische Parameter-Kosten-Zuordnung zwischen verschiedenen Kombinationen unterschiedlicher Werte der Parameter des Modells des industriellen Systems (103) und ihrer entsprechenden Kalibrierungsfehler zu trainieren, wobei der Kalibrierungsfehler zwischen simulierten Zuständen des industriellen Systems (103) für die Kombination verschiedener Werte von Parametern und entsprechenden Zuständen des industriellen Systems (103) in den Betriebsdaten berechnet wird, und wobei der Parameter-zu-Kosten-Regressor (107c) iterativ trainiert wird, bis eine Beendigungsbedingung erfüllt ist, und wobei zur Durchführung einer Iteration der mindestens eine Prozessor (211) eingerichtet ist, um:

eine Erfassungsfunktion (107d) von Momenten erster und zweiter Ordnung der Kalibrierungsfehler auszuführen, die eingerichtet ist, eine Kombination von Parametern mit maximaler Wahrscheinlichkeit zur Minimierung der Kalibrierungsfehler gemäß der probabilistischen Parameter-Kosten-Zuordnung zu identifizieren;
die identifizierte Kombination von Parametern mit einer ausfallrobusten Erfassungsfunktion (107a) zu aktualisieren, die die identifizierten Parameter gemäß dem Misserfolgklassifikator (107b) anpasst, um die Wahrscheinlichkeit des Ausfalls des Betriebs des industriellen Systems (103) mit dem Modell, das die aktualisierten Parameter aufweist, zu verringern;
den Betrieb des industriellen Systems (103), das durch die Steuereingaben in den Betriebsdaten gesteuert wird, mit dem Modell zu simulieren, das die aktualisierten Parameter aufweist, um simulierte Zustände des industriellen Systems (103) zu erzeugen; und

die probabilistische Parameter-Kosten-Zuordnung auf der Grundlage der aktualisierten Parameter und Kalibrierungsfehler zwischen den simulierten Zuständen des industriellen Systems (103) und den entsprechenden Zuständen des industriellen Systems (103) in den Betriebsdaten zu aktualisieren; und

wenn die Beendigungsbedingung erfüllt ist, das Modell des industriellen Systems (103) mit einer optimalen Kombination der Parameter zu kalibrieren, die die größte Wahrscheinlichkeit hat, die Kalibrierungsfehler bei der probabilistischen Parameter-Kosten-Zuordnung gemäß der Erfassungsfunktion (107d) zu minimieren.

2. Kalibrierungssystem (200) nach Anspruch 1, wobei der mindestens eine Prozessor (211) ferner dazu eingerichtet ist:

einen Ausfallbereich innerhalb des zulässigen Wertebereichs von Parametern in der ausgewählten Kombination von Parametern zu schätzen, wobei der Ausfallbereich mindestens eine Kombination von Werten der Parameter umfasst, die einen Ausfall des Betriebs des industriellen Systems (103) verursacht; und

Wahrscheinlichkeiten des Simulationsausfalls über den gesamten zulässigen Wertebereich der Parameter in der ausgewählten Parameterkombination auf der Grundlage des geschätzten Ausfallbereichs bereitzustellen.

3. Kalibrierungssystem (200) nach Anspruch 1, wobei die Trainingsdaten ferner Werte einer Kostenfunktion enthalten, wobei die Werte der Kostenfunktion mindestens einem entsprechen von: reellwertigen Skalaren, wenn die Simulation des Modells erfolgreich ist, oder Nullwerte, wenn die Simulation des Modells nicht erfolgreich ist.

4. Kalibrierungssystem (200) nach Anspruch 2, wobei zum Erhalten des Ausfallbereichs der mindestens eine Prozessor (211) ferner eingerichtet, um:
innerhalb des zulässigen Parameterbereichs Stichproben zu nehmen, um die Trainingsdaten für das Lernen des Ausfallbereichs zu erhalten, wobei der Ausfallbereich unter Verwendung eines skalierbaren Variations-Gauß-Prozess-Klassifikators (VGPC) erlernt wird.

5. Kalibrierungssystem (200) nach Anspruch 4, wobei der Parameter-zu-Kosten-Regressor iterativ unter Verwendung einer Bayes'schen Optimierung trainiert wird und wobei die Bayes'sche Optimierung ein Kosten-/Belohnungsfunktionsmodell unter Verwendung eines Gauß'schen Prozesses (GP) zum Berechnen eines probabilistischen GP-Surrogatmodells zum Bereitstellen einer probabilistischen Parameter-Kosten-Zuordnung umfasst.

6. Kalibrierungssystem (200) nach Anspruch 4, wobei der mindestens eine Prozessor (211) ferner dazu eingerichtet ist, um:

vorbestimmte Bedingungen für den Ausfallbereich zu erhalten; und
den Ausfallbereich iterativ zu schätzen, bis der geschätzte Ausfallbereich die vorgegebene Bedingung für den Ausfallbereich erfüllt.

7. Kalibrierungssystem (200) nach Anspruch 5, wobei eine Prioritätsfunktion des VGPC auf der Grundlage der Trainingsdaten und einer benutzerspezifischen Kernel-Funktion initialisiert wird.

8. Kalibrierungssystem (200) nach Anspruch 5, wobei die Bayes'sche Optimierung die Erfassungsfunktion enthält, die eingerichtet ist, die probabilistische Zuordnung, die durch das probabilistische GP-Surrogatmodell bereitgestellt wird, auszunutzen, um die Abfrage der konsequenten Kombination der verschiedenen Parameter zu steuern.

9. Kalibrierungssystem (200) nach Anspruch 5, wobei die Bayes'sche Optimierung einen Mittelwert und eine Varianz des Ersatz-GP-Modells verwendet, um die Erfassungsfunktion zu konstruieren, um die Kombination von Parametern auszuwählen, die die maximale Wahrscheinlichkeit der Minimierung des Kalibrierungsfehlers gemäß der probabilistischen Parameter-Kosten-Zuordnung aufweist.

10. Kalibrierungssystem (200) nach Anspruch 7, wobei die Erfassungsfunktion eine Erfassungsfunktion mit erwarteter Verbesserung (expected improvement, EI) umfasst oder wobei die benutzerspezifische Kernel-Funktion mindestens einen umfasst von: einem quadratischen exponentiellen Kernel oder einem Matern-Kernel.

11. Kalibrierungssystem (200) nach Anspruch 8, wobei der mindestens eine Prozessor (211) ferner eingerichtet ist, um:
unter Verwendung des skalierbaren VPGC die Ausfallwahrscheinlichkeiten der Simulation über den gesamten zulässigen Wertebereich der Parameter in der gewählten Parameterkombination zu ermitteln,

wobei die erhaltenen Wahrscheinlichkeiten des Simulationsausfalls von der Erfassungsfunktion verwendet werden, um eine ausfallrobuste EI-Erfassungsfunktion (failure-robust EI, FREI) zu bilden.

12. Kalibrierungsverfahren zum Kalibrieren eines Modells der Dynamik eines industriellen Systems (103), das Änderungen eines Zustands des industriellen Systems (103) als Reaktion auf die Steuerung des industriellen Systems (103) gemäß einer Sequenz von Steuereingaben an Aktuatoren des industriellen Systems (103) erklärt, um Betriebsdaten anzupassen, die Messungen eines Betriebs des industriellen Systems (103) anzeigen, einschließlich Werten der Steuereingaben und entsprechenden Werten des Zustands des industriellen Systems (103), wobei das Kalibrierungsverfahren umfasst:

mehrfaches Simulieren eines Betriebs des industriellen Systems (103), wobei jeder Simulationszyklus die Ausführung des Modells des industriellen Systems (103) mit verschiedenen Kombinationen von Werten von Parametern umfasst, die innerhalb eines zulässigen Wertebereichs der Parameter ausgewählt werden, um den Erfolg oder Misserfolg der Simulation auf der Grundlage von mindestens einer Bedingung zu schätzen, die sich auf die erwartete Beendigungszeit oder die zugrunde liegende Dynamik der Simulation bezieht;
Trainieren eines Misserfolgklassifikators (107b), der eine Wahrscheinlichkeit eines Misserfolgs des Betriebs des industriellen Systems (103) für den zulässigen Wertebereich von Parametern des Modells unter Verwendung von Trainingsdaten, die die ausgewählten Kombinationen der Werte der Parameter enthalten, die mit dem geschätzten Erfolg oder Misserfolg der Simulation gekennzeichnet sind, definiert;
Trainieren eines Parameter-zu-Kosten-Regressors (107c) für eine probabilistische Parameter-Kosten-Zuordnung zwischen verschiedenen Kombinationen unterschiedlicher Werte der Parameter des Modells des industriellen Systems (103) und ihrer entsprechenden Kalibrierungsfehler, wobei der Kalibrierungsfehler zwischen simulierten Zuständen des industriellen Systems (103) für die Kombination verschiedener Werte von Parametern und entsprechenden Zuständen des industriellen Systems (103) in den Betriebsdaten berechnet wird, und wobei der Parameter-zu-Kosten-Regressor (107c) iterativ trainiert wird, bis eine Beendigungsbedingung erfüllt ist, und wobei zur Durchführung einer Iteration das Kalibrierungsverfahren umfasst:

Ausführen einer Erfassungsfunktion (107d) von Momenten erster und zweiter Ordnung der Kalibrierungsfehler, die eine Kombination von Parametern mit der maximalen Wahrscheinlichkeit zur Minimierung der Kalibrierungsfehler gemäß der probabilistischen Parameter-Kosten-Zuordnung identifiziert;
Aktualisieren der identifizierten Kombination von Parametern mit einer ausfallrobusten Erfassungsfunktion (107a), die die identifizierten Parameter gemäß dem Misserfolgklassifikator (107b) anpasst, um die Wahrscheinlichkeit des Ausfalls des Betriebs des industriellen Systems (103) mit dem Modell, das die aktualisierten Parameter aufweist, zu verringern;
Simulieren des Betriebs des industriellen Systems (103), das durch die Steuereingaben in den Betriebsdaten gesteuert wird, mit dem Modell, das die aktualisierten Parameter aufweist, um simulierte Zustände des industriellen Systems (103) zu erzeugen; und
Aktualisieren der probabilistischen Parameter-Kosten-Zuordnung auf der Grundlage der aktualisierten Parameter und Kalibrierungsfehler zwischen den simulierten Zuständen des industriellen Systems (103) und den entsprechenden Zuständen des industriellen Systems (103) in den Betriebsdaten; und
Kalibrieren, wenn die Beendigungsbedingung erfüllt ist, des Modells des industriellen Systems (103) mit einer optimalen Kombination der Parameter, die die größte Wahrscheinlichkeit hat, die Kalibrierungsfehler bei der probabilistischen Parameter-Kosten-Zuordnung gemäß der Erfassungsfunktion (107d) zu minimieren.

13. Kalibrierungsverfahren nach Anspruch 12, ferner umfassend:

Schätzen eines Ausfallbereichs innerhalb des zulässigen Wertebereichs von Parametern in der ausgewählten Kombination von Parametern, wobei der Ausfallbereich mindestens eine Kombination von Werten der Parameter umfasst, die einen Ausfall des Betriebs des industriellen Systems (103) verursacht; und
Bereitstellen von Wahrscheinlichkeiten des Simulationsausfalls über den gesamten zulässigen Wertebereich der Parameter in der ausgewählten Parameterkombination auf der Grundlage des geschätzten Ausfallbereichs.

14. Kalibrierungsverfahren nach Anspruch 13, wobei das Kalibrierungsverfahren zum Erhalten der Ausfallbereiche bei der Kalibrierung ferner umfasst:
Stichprobennahme innerhalb des zulässigen Parameterbereichs, um die Trainingsdaten für das Lernen des Ausfallbereichs zu erhalten, wobei der Ausfallbereich unter Verwendung eines skalierbaren Variations-Gauß-Prozess-Klassifikators (VGPC) gelernt wird.

**15.** Kalibrierungsverfahren nach Anspruch 13,

wobei der probabilistische Parameter-zu-Kosten-Regressor iterativ unter Verwendung einer Bayes'schen Optimierung trainiert wird und wobei die Bayes'sche Optimierung ein Kosten-/Belohnungsfunktionsmodell unter Verwendung eines Gauß'schen Prozesses (GP) zum Berechnen eines probabilistischen GP-Surrogatmodells zum Bereitstellen einer probabilistischen Parameter-Kosten-Zuordnung umfasst,
oder wobei das Verfahren ferner umfasst:

Erhalten vorbestimmter Bedingungen für den Ausfallbereich; und
iteratives Schätzen des Ausfallbereichs, bis der geschätzte Ausfallbereich die vorgegebene Bedingung für den Ausfallbereich erfüllt.

## Revendications

**1.** Système d'étalonnage (200) pour étalonner un modèle de dynamique d'un système industriel (103), le système d'étalonnage (200) comprenant un émetteur-récepteur (101a) configuré pour échanger des données sur un réseau (105), les données comprenant des données opérationnelles indiquant des mesures d'un fonctionnement du système industriel (103) et une séquence d'entrées de commande à des actionneurs du système industriel (103),
le modèle étant configuré pour expliquer les changements d'un état du système industriel (103) en réponse à la commande du système industriel (103) conformément à la séquence des entrées de commande pour s'adapter aux données opérationnelles indiquant les mesures d'un fonctionnement du système industriel (103) comportant les valeurs des entrées de commande et les valeurs correspondantes de l'état du système industriel (103), le système d'étalonnage (200) comprenant : au moins un processeur (211) ; et une mémoire (213) ayant des instructions stockées sur celle-ci qui, lorsqu'elles sont exécutées par l'au moins un processeur (211), amènent le système d'étalonnage (200) à :

simuler plusieurs fois un fonctionnement du système industriel (103), chaque cycle de simulation comportant l'exécution du modèle du système industriel (103) ayant différentes combinaisons de valeurs de paramètres sélectionnées dans une plage admissible de valeurs des paramètres pour estimer le succès ou l'échec de la simulation sur la base d'au moins une condition liée à l'heure de fin prévue ou à la dynamique sous-jacente de la simulation ;
entraîner un classificateur d'échec (107b) définissant une probabilité d'échec du fonctionnement du système industriel (103) pour la plage admissible de valeurs des paramètres du modèle à l'aide de données d'entraînement comportant les combinaisons sélectionnées des valeurs des paramètres étiquetées avec le succès ou l'échec estimé de la simulation ;
entraîner un régresseur paramètre-coût (107c) pour un mappage probabiliste paramètre-coût entre diverses combinaisons de valeurs différentes des paramètres du modèle du système industriel (103) et leurs erreurs d'étalonnage correspondantes, dans lequel l'erreur d'étalonnage est calculée entre les états simulés du système industriel (103) pour la combinaison de différentes valeurs de paramètres et les états correspondants du système industriel (103) dans les données opérationnelles, et dans lequel le régresseur paramètre-coût (107c) est entraîné de manière itérative jusqu'à ce qu'une condition de fin soit satisfaite, et dans lequel, pour effectuer une itération, l'au moins un processeur (211) est configuré pour :

exécuter une fonction d'acquisition (107d) des deux premiers moments d'ordre des erreurs d'étalonnage configurée pour identifier une combinaison de paramètres ayant une probabilité maximale de minimiser les erreurs d'étalonnage conformément au mappage probabiliste paramètre-coût ;
mettre à jour la combinaison identifiée de paramètres avec une fonction d'acquisition robuste à l'échec (107a) ajustant les paramètres identifiés conformément au classificateur d'échec (107b) afin de réduire la probabilité d'échec du fonctionnement du système industriel (103) avec le modèle ayant les paramètres mis à jour ;
simuler le fonctionnement du système industriel (103) commandé par les entrées de commande dans les données opérationnelles avec le modèle ayant les paramètres mis à jour pour produire des états simulés du système industriel (103) ; et
mettre à jour le mapping probabiliste paramètre-coût sur la base des paramètres mis à jour et des erreurs d'étalonnage entre les états simulés du système industriel (103) et les états correspondants du système industriel (103) dans les données opérationnelles ; et
étalonner, lorsque la condition de fin est satisfaite, le modèle du système industriel (103) avec une combinaison optimale des paramètres ayant la plus grande probabilité de minimiser les erreurs d'étalonnage au niveau du mapping probabiliste paramètre-coût conformément à la fonction d'acquisition (107d).

2. Système d'étalonnage (200) selon la revendication 1, dans lequel l'au moins un processeur (211) est en outre configuré pour :

estimer une zone d'échec dans la plage admissible de valeurs de paramètres dans la combinaison sélectionnée de paramètres, dans lequel la zone d'échec comprend au moins une combinaison de valeurs des paramètres qui entraîne un échec du fonctionnement du système industriel (103) ; et
fournir des probabilités d'échec de la simulation sur l'ensemble de la plage admissible de valeurs de paramètres dans la combinaison sélectionnée de paramètres sur la base de la zone d'échec estimée.

3. Système d'étalonnage (200) selon la revendication 1, dans lequel les données d'apprentissage comportent en outre les valeurs d'une fonction de coût, dans lequel les valeurs de la fonction de coût correspondent à au moins l'un de : des scalaires à valeur réelle lorsque la simulation du modèle est réussie ou des valeurs nulles lorsque la simulation du modèle est infructueuse.

4. Système d'étalonnage (200) selon la revendication 2, dans lequel, pour obtenir la zone d'échec, l'au moins un processeur (211) est en outre configuré pour :
échantillonner dans la plage admissible de paramètres afin d'obtenir les données d'entraînement pour l'apprentissage de la zone d'échec, dans lequel la zone est apprise à l'aide d'un classificateur de processus gaussien variationnel évolutif (VGPC).

5. Système d'étalonnage (200) selon la revendication 4, dans lequel le régresseur paramètre-coût est entraîné de manière itérative à l'aide d'une optimisation bayésienne, et dans lequel l'optimisation bayésienne comporte un modèle de fonction coût/récompense utilisant un processus gaussien (GP) pour calculer un modèle de substitution GP probabiliste afin de fournir un mappage paramètre-coût probabiliste.

6. Système d'étalonnage (200) selon la revendication 4, dans lequel l'au moins un processeur (211) est en outre configuré pour :

obtenir des conditions prédéterminées pour la zone d'échec ; et
estimer la zone d'échec de manière itérative jusqu'à ce que la zone d'échec estimée satisfasse à la condition prédéterminée pour la zone d'échec.

7. Système d'étalonnage (200) selon la revendication 5, dans lequel une fonction préalable du VGPC est initialisée sur la base des données d'apprentissage et d'une fonction noyau spécifiée par l'utilisateur.

8. Système d'étalonnage (200) selon la revendication 5, dans lequel l'optimisation bayésienne comporte la fonction d'acquisition qui est configurée pour exploiter le mapping probabiliste fourni par le modèle de substitution GP probabiliste afin de diriger l'interrogation de la combinaison conséquente des différents paramètres.

9. Système d'étalonnage (200) selon la revendication 5, dans lequel l'optimisation bayésienne utilise une moyenne et une variance du modèle GP de substitution pour construire la fonction d'acquisition afin de sélectionner la combinaison de paramètres ayant la probabilité maximale de minimiser l'erreur d'étalonnage conformément au mapping probabiliste paramètre-coût.

10. Système d'étalonnage (200) selon la revendication 7, dans lequel la fonction d'acquisition comporte une fonction d'acquisition d'amélioration attendue (EI) ou dans lequel la fonction de noyau spécifiée par l'utilisateur comprend au moins l'un de : un noyau exponentiel quadratique ou un noyau de Matern.

11. Système d'étalonnage (200) selon la revendication 8, dans lequel l'au moins un processeur (211) est en outre configuré pour :
obtenir, à l'aide du VPGC évolutif, des probabilités d'échec de la simulation sur toute la plage admissible de valeurs de paramètres dans la combinaison sélectionnée de paramètres,
dans lequel les probabilités obtenues d'échec de la simulation sont utilisées par la fonction d'acquisition pour former une fonction d'acquisition de l'EI robuste à l'échec (FREI).

**12.** Procédé d'étalonnage pour étalonner un modèle de dynamique d'un système industriel (103) qui explique les changements d'un état du système industriel (103) en réponse à la commande du système industriel (103) conformément à une séquence d'entrées de commande aux actionneurs du système industriel (103), pour adapter les données opérationnelles indiquant des mesures d'un fonctionnement du système industriel (103) comportant les valeurs des entrées de commande et les valeurs correspondantes de l'état du système industriel (103), le procédé d'étalonnage comprenant :

la simulation plusieurs fois d'un fonctionnement du système industriel (103), chaque cycle de simulation comportant l'exécution du modèle du système industriel (103) ayant différentes combinaisons de valeurs de paramètres sélectionnées dans une plage admissible de valeurs des paramètres pour estimer le succès ou l'échec de la simulation sur la base d'au moins une condition liée à l'heure de fin prévue ou à la dynamique sous-jacente de la simulation ;

l'entraînement d'un classificateur d'échec (107b) définissant une probabilité d'échec du fonctionnement du système industriel (103) pour la plage admissible de valeurs de paramètres du modèle à l'aide de données d'entraînement comportant les combinaisons sélectionnées des valeurs des paramètres étiquetés avec le succès ou l'échec estimé de la simulation ;

l'entraînement d'un régresseur paramètre-coût (107c) pour un mapping probabiliste paramètre-coût entre diverses combinaisons de valeurs différentes des paramètres du modèle du système industriel (103) et leurs erreurs d'étalonnage correspondantes, dans lequel l'erreur d'étalonnage est calculée entre des états simulés du système industriel (103) pour la combinaison de valeurs différentes de paramètres et des états correspondants du système industriel (103) dans les données opérationnelles, et dans lequel le régresseur paramètre-coût (107c) est entraîné de manière itérative jusqu'à ce qu'une condition de fin soit satisfaite, et dans lequel pour effectuer une itération le procédé d'étalonnage comprend :

l'exécution d'une fonction d'acquisition (107d) des deux premiers moments d'ordre des erreurs d'étalonnage identifiant une combinaison de paramètres ayant la probabilité maximale de minimiser les erreurs d'étalonnage conformément au mapping probabiliste paramètre-coût ;

la mise à jour de la combinaison identifiée de paramètres avec une fonction d'acquisition robuste à l'échec (107a) ajustant les paramètres identifiés conformément au classificateur d'échec (107b) pour réduire la probabilité d'échec du fonctionnement du système industriel (103) avec le modèle ayant les paramètres mis à jour ;

la simulation du fonctionnement du système industriel (103) commandé par les entrées de commande dans les données opérationnelles avec le modèle ayant les paramètres mis à jour pour produire des états simulés du système industriel (103) ; et

mettre à jour la cartographie probabiliste des paramètres par rapport aux coûts sur la base des paramètres mis à jour et des erreurs d'étalonnage entre les états simulés du système industriel (103) et les états correspondants du système industriel (103) dans les données opérationnelles ; et

étalonner, lorsque la condition de fin est remplie, le modèle du système industriel (103) avec une combinaison optimale des paramètres ayant la plus grande probabilité de minimiser les erreurs d'étalonnage au niveau de la correspondance probabiliste entre les paramètres et les coûts, conformément à la fonction d'acquisition (107d).

**13.** Procédé d'étalonnage selon la revendication 12, comprenant en outre :

l'estimation d'une zone d'échec dans la plage admissible de valeurs de paramètres dans la combinaison sélectionnée de paramètres, dans lequel la zone d'échec comprend au moins une combinaison de valeurs des paramètres qui entraîne un échec du fonctionnement du système industriel (103) ; et

la fourniture de probabilités d'échec de la simulation sur l'ensemble de la plage admissible de valeurs de paramètres dans la combinaison sélectionnée de paramètres sur la base de la zone d'échec estimée.

**14.** Procédé d'étalonnage selon la revendication 13, dans lequel, pour obtenir les zones d'échec de l'étalonnage, le procédé d'étalonnage comprend en outre :
l'échantillonnage dans la plage admissible de paramètres afin d'obtenir les données d'entraînement pour l'apprentissage de la zone d'échec, et dans lequel la zone d'échec est apprise à l'aide d'un classificateur de processus gaussien variationnel évolutif (VGPC).

**15.** Procédé d'étalonnage selon la revendication 13,

dans lequel le régresseur probabiliste paramètre-coût est entraîné de manière itérative à l'aide d'une optimisation bayésienne, et dans lequel l'optimisation bayésienne comporte un modèle de fonction coût/récompense utilisant un processus gaussien (GP) pour calculer un modèle probabiliste de substitution GP afin de fournir un mapping probabiliste paramètre-coût,

ou dans lequel le procédé comprend en outre :

l'obtention de conditions prédéterminées pour la zone d'échec ; et
l'estimation de la zone d'échec de manière itérative jusqu'à ce que la zone d'échec estimée satisfasse à la condition prédéterminée pour la zone d'échec.

FIG.1A

100

Calibration system 101

Transceiver
101a

Network 105

Industrial system
103

# FIG.1B

Failure-Robust Bayesian Optimization (FR-BO)

FIG.1C

FIG.1D

## FIG.2

200

receive data indicative of measurements of the operation of the industrial system including values of the control inputs to the actuators of the industrial system and values of a state of the industrial system caused by the operation of the industrial system according to the values of the control inputs

207

209 — Input interface

203 — Network Interface Controller

201

Network

205

211 — Processor

215

107

Storage

FR-BO Module

Failure Robust Acquisition Function Module — 107a

Failure Classifier Module — 107b

Parameter-to-cost Regressor Module — 107c

Acquisition Function Module — 107d

217 — Output interface

222 — Controller

213 — Memory

EP 4 214 582 B1

FIG.3

EP 4 214 582 B1

TABLE I
FR-PO IMPLEMENTATION FOR ROBERTSON SYSTEM.

|  | VGPC | GP |
| --- | --- | --- |
| Model | Approximate GP | Exact GP |
| Kernel | Squared Exponential | Matern-3/2 |
| Inducing Points | Yes | Yes |
| Likelihood | Bernoulli | Gaussian |
| Loss Function | Variational ELBO | MLL |
| Optimizer | Adam | Adam |
| Learning Rate | 0.01 | 0.05 |
| Training Iters | 2000 | 500 |

FIG.4A

EP 4 214 582 B1

FIG.5A

500 · 509 · 503 · Outside Air · Roof · 505

511

Outside Wall

Concrete

Insulation

Plenum

Orifice

Ceiling Material

513

Ventilation Air · Fan · Orifice

Outside Air

PI Control

519

South Facing Window

501

Room Mixed Air

521

Blinds

Scaled-Up RAC

Constant Indoor Temperature

North and East Wall (Indoor)

Carpet Tile

Air

Concrete Slab

Constant Indoor Temperature

515

507

517

South and West Wall (Outside)

Floor

Outside Wall x 4

Weather

Plaster Board · Air · Rockwool · ALC

Outside Air

EP 4 214 582 B1

## FIG.5B

| PARAMETER | TRUE | FR-BO |
|---|---|---|
| **Building Parameters** | | |
| Airflow infiltration rate | $3.368 \times 10^{-2}$ | $3.319 \times 10^{-2}$ |
| Thickness of the floor | $1.016 \times 10^{-1}$ | $9.593 \times 10^{-2}$ |
| Infrared emissivity of roof (outer) | $9.000 \times 10^{-1}$ | $8.646 \times 10^{-1}$ |
| Solar emissivity of roof (outer) | $9.000 \times 10^{-1}$ | $8.435 \times 10^{-1}$ |
| Infrared emissivity of roof (inner) | $7.000 \times 10^{-1}$ | $6.456 \times 10^{-1}$ |
| Solar emissivity of roof (inner) | $7.000 \times 10^{-1}$ | $7.592 \times 10^{-1}$ |
| Interior room air HTC | $3.000$ | $3.093$ |
| Exterior air HTC | $1.000 \times 10^{1}$ | $0.990 \times 10^{1}$ |
| **HVAC Parameters** | | |
| Outdoor HEX HTC adjustment factor | $1.000$ | $1.032$ |
| Indoor HEX HTC adjustment factor | $1.000$ | $0.904$ |
| Indoor HEX Lewis number | $8.540 \times 10^{-1}$ | $8.650 \times 10^{-1}$ |
| Outdoor HEX vapor HTC | $5.000 \times 10^{2}$ | $5.152 \times 10^{2}$ |
| Outdoor HEX 2-phase HTC | $3.000 \times 10^{3}$ | $3.215 \times 10^{3}$ |
| Outdoor HEX liquid HTC | $7.000 \times 10^{2}$ | $7.122 \times 10^{2}$ |
| Indoor HEX vapor HTC | $5.000 \times 10^{2}$ | $5.240 \times 10^{2}$ |
| Indoor HEX 2-phase HTC | $2.000 \times 10^{3}$ | $1.995 \times 10^{3}$ |
| Indoor HEX liquid | $7.000 \times 10^{2}$ | $7.258 \times 10^{2}$ |

525    527    523

EP 4 214 582 B1

FIG.5C

FIG.5D

FIG.6

FIG.7

700

- 701 — Simulating an operation of the system multiple times to train a failure classifier
- 703 — Training the failure classifier
- 705 — Training the parameter-to-cost regressor
  - 705a — Executing a calibration acquisition function
  - 705b — Updating the identified parameters with a failure-robust acquisition function
  - 705c — Simulating system operation to update the probabilistic parameter-to-cost mapping
- 707 — Calibrating according to the trained probabilistic parameter-to-cost mapping

FIG.8

Obtaining a model of the industrial system ⟋801

Defining failure of the model ⟋803

Estimating failure region ⟋805

Refining model or admissible parameter space ⟋807

809

Does the refined model satisfy predetermined condition?

NO

YES

811

Calibrating based on the refined model

**EP 4 214 582 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 2020327435 A1

**Non-patent literature cited in the description**

- **CHAKRABARTY ANKUSH et al.** Data-driven calibration of physics-informed models of joint building/equipment dynamics using Bayesian optimization. *2021 Building Simulation Conference,* 2021, 1-10

- **WU MENG et al.** A Feature-Based Diagnosis Framework for Power Plant Model Validation. *2018 Power Systems Computation Conference,* 2018, 1-17
- **GIL KEREN et al.** Calibrated Prediction Intervals for Neural Network Regressors. Cornell University Library